(19) Europäisches Patentamt
European Patent Office
Office européen des brevets

(11) **EP 2 318 904 B1**

(12) **EUROPEAN PATENT SPECIFICATION**

(45) Date of publication and mention
of the grant of the patent:
**09.08.2017 Bulletin 2017/32**

(21) Application number: **09779867.2**

(22) Date of filing: **22.06.2009**

(51) Int Cl.:
**G06F 3/042** *(2006.01)*

(86) International application number:
**PCT/EP2009/057731**

(87) International publication number:
**WO 2010/006886 (21.01.2010 Gazette 2010/03)**

(54) **DETERMINING THE LOCATION OF ONE OR MORE OBJECTS ON A TOUCH SURFACE**

BESTIMMEN DES ORTS EINES ODER MEHRERER OBJEKTE AUF EINER
BERÜHRUNGSOBERFLÄCHE

PROCÉDÉ DE DÉTERMINATION DE L'EMPLACEMENT D'UN OU PLUSIEURS OBJETS SUR UNE
SURFACE TACTILE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **23.06.2008 SE 0801466
23.06.2008 US 129373 P
23.06.2008 SE 0801467
23.06.2008 US 129372 P
05.02.2009 SE 0900138
05.02.2009 US 202208 P
15.04.2009 SE 0950246
15.04.2009 US 202874 P**

(43) Date of publication of application:
**11.05.2011 Bulletin 2011/19**

(73) Proprietor: **FlatFrog Laboratories AB
226 60 Lund (SE)**

(72) Inventors:
• **WASSVIK, Ola
S-223 58 Lund (SE)**
• **CHRISTIANSSON, Tomas
S-247 45 Torna-Hällestad (SE)**

• **BRYBORN, Mattias
S-222 70 Lund (SE)**

(74) Representative: **Davies, Dominic Jack et al
Event Horizon IP AB
Barometergatan 16B
211 17 Malmö (SE)**

(56) References cited:
EP-A2- 1 752 864          WO-A1-2007/112742
WO-A1-2008/039006     WO-A2-2006/095320
WO-A2-2010/006883     WO-A2-2010/006884
WO-A2-2010/006885     CN-A- 101 075 168
GB-A- 2 131 544          US-A- 4 746 770
US-A1- 2004 252 091     US-A1- 2006 017 709
US-B1- 6 972 753

• LIU J ET AL: "Multiple touch points identifying
method, involves starting touch screen, driving
specific emission tube, and computing and
transmitting coordinate of touch points to
computer system by direct lines through
interface of touch screen", WPI / THOMSON,, vol.
2008, no. 28, 21 November 2007 (2007-11-21),
XP002557842,

**Description**

Technical Field

The present invention relates to touch-sensitive panels and data processing techniques in relation to such panels.

Background Art

To an increasing extent, touch-sensitive panels are being used for providing input data to computers, electronic measurement and test equipment, gaming devices, etc. The panel may be provided with a graphical user interface (GUI) for a user to interact with using e.g. a pointer, stylus or one or more fingers. The GUI may be fixed or dynamic. A fixed GUI may e.g. be in the form of printed matter placed over, under or inside the panel. A dynamic GUI can be provided by a display screen integrated with, or placed underneath, the panel or by an image being projected onto the panel by a projector.

There are numerous known techniques for providing touch sensitivity to the panel, e.g. by using cameras to capture light scattered off the point(s) of touch on the panel, or by incorporating resistive wire grids, capacitive sensors, strain gauges, etc into the panel.

US2004/0252091 discloses an alternative technique which is based on frustrated total internal reflection (FTIR). Light is coupled into a panel to propagate inside the panel by total internal reflection. Arrays of photo-detectors are located around the perimeter of the panel to detect the light. When an object comes into contact with a surface of the panel, the light will be locally attenuated at the point of touch. The location of the object is determined by triangulation based on the attenuation of the light from each source at the array of light sensors.

US 3,673,327 discloses a similar technique in which arrays of light beam transmitters are placed along two edges of a panel to set up a grid of intersecting light beams that propagate through the panel by internal reflection. Corresponding arrays of beam sensors are placed at the opposite edges of the panel. When an object touches a surface of the panel, the beams that intersect at the point of touch will be attenuated. The attenuated beams on the arrays of detectors directly identify the location of the object.

These known FTIR techniques suffer from being costly, i.a. since they require the use of a large number of detectors, and possibly a large number of light sources. Furthermore, they are not readily scalable since the required number of detectors/sources increases significantly with the surface area of the panel. Also, the spatial resolution of the panel is dependent on the number of detectors/sources. Still further, the energy consumption for illuminating the panel may be considerable and may increase significantly with increasing surface area of the panel.

Summary of the Invention

It is an object of the invention to at least partly overcome one or more of the above-identified limitations of the prior art.

This and other objects, which may appear from the description below, are at least partly achieved by means of methods, apparatuses and a computer program product according to the independent claims, embodiments thereof being defined by the dependent claims.

A first aspect of the invention is an apparatus for determining a location of at least one object on a touch surface, said apparatus comprising: a panel defining the touch surface and an opposite surface; an illumination arrangement adapted to introduce at least two beams of radiation into the panel for propagation by internal reflection between the touch surface and the opposite surface, and to sweep each beam along the touch surface within a sensing area, whereby an object that touches the touch surface within the sensing area causes said at least two beams to be temporarily attenuated; a detection arrangement for coupling the beams out of the panel as they are swept along one or more elongate outcoupling sites on the panel downstream of the sensing area, said detection arrangement comprising at least one light sensor which is optically coupled to said one or more outcoupling sites and adapted to measure the received energy of the respective beam within said one or more outcoupling sites; and a data processor connected to the detection arrangement and configured to obtain output signals indicative of the received energy of the respective beam within said one or more outcoupling sites as a function of time and to identify the location of the object based on the output signals.

In one embodiment, the data processor is configured to identify, in the output signals, a set of signal profiles originating from said object; determine at least part of an attenuated light path across the sensing area based on each signal profile; and identify the location of the object based on the thus-determined attenuated light paths. The data processor may be configured to determine the attenuated light path by mapping at least one time point of each signal profile in the output signal to a light path across the sensing area. Further, the data processor, in said mapping, may be configured to map at least one time point of each signal profile in the output signal to a spatial position within the one or more outcoupling sites.

In one embodiment, the data processor is configured to map a sequence of time points in each output signal to a corresponding sequence of spatial positions within the one or more outcoupling sites, and to identify the set of signal profiles in the thus-mapped output signals. In one implementation, the illumination arrangement defines a set of incoupling points on the panel for each beam, and wherein the data processor, when determining said at least part of an attenuated light path based on the signal profile, is configured to apply a predetermined width function which is representative of a dependence of signal profile width on distance to one of the incoupling points due to light scattering caused by at least one of the touch surface and the opposite surface. The width function may represent the factual width of the object given the signal profile, as a function of distance to the incoupling point.

In one implementation, the data processor, when determining said at least part of an attenuated light path for each signal profile, is configured to reconstruct a center ray of the attenuated light path by geometrically retracing a center point of the signal profile to one of said incoupling points; determine a signal width of the signal profile; and determine an object width at one or more candidate positions along the center ray by applying said width function, thereby determining part of said attenuated light path. The data processor may be configured to determine said one or more candidate positions by triangulation using a set of center rays that are reconstructed from said set of signal profiles.

In one implementation, the data processor, when determining said at least part of an attenuated light path for each signal profile, is configured to determine a set of candidate positions, and the data processor, when identifying the location of the object, is configured to: calculate a shape measure and/or an area measure for at least one candidate position based on the thus-determined attenuated light paths; and to validate said at least one candidate position based on the shape measure and/or area measure.

In one embodiment, the data processor is configured to normalize each output signal by a background signal which represents the output signal without the object touching the touch surface within the sensing area.

In one embodiment, the light sensor has an elongate light-sensing surface which is arranged parallel to and optically facing the outcoupling site. The outcoupling site may be defined by a peripheral edge portion of the panel, and wherein the light sensor is attached to the peripheral edge. Alternatively, the outcoupling site may be defined by an elongate coupling element attached to one of the touch surface and the opposite surface, and wherein the light sensor is attached to the coupling element.

In one embodiment, the illumination arrangement is configured to sweep the beams by translating each beam with an essentially invariant main direction within the sensing area.

In one embodiment, the illumination arrangement is configured to sweep the beams such that they are non-parallel within the sensing area.

In one embodiment, the detection arrangement comprises a fixed re-directing device which is arranged in alignment with and optically facing the outcoupling site and which is configured to receive and re-direct at least one of the beams onto a common detection point while said at least one beam is swept along the touch surface;

and the detection arrangement is configured to measure the received energy within the outcoupling site at said common detection point. The fixed re-directing device may comprise an elongate optical element that defines an output focal plane, and the illumination arrangement may be configured such that the beam, while being swept within the sensing area, is swept along the elongate optical element at an essentially invariant angle of incidence. In one implementation, the light sensor is arranged in said output focal plane. In another implementation, the elongate optical element is arranged to receive at least two beams at a respective angle of incidence, and the detection arrangement comprises at least two light sensors, which are arranged at separate locations in said output focal plane to measure the energy of the respective beam. In these and other implementations, the or each light sensor may comprise a light-sensing surface and a device for increasing the effective light-sensing area of the light sensor, said device being arranged intermediate the re-directing device and the light-sensing surface. For example, the device for increasing the effective light-sensing area may be a diffusing element or a concentrator. In yet another implementation, a movable deflection element is located at the common detection point, said movable deflection element being synchronized with the illumination arrangement for deflecting the beam onto the light sensor.

In the foregoing, the re-directing device may be arranged to extend along an edge portion of said panel.

In one embodiment, the illumination arrangement comprises a beam-scanning device configured to sweep an input beam around an axis of rotation, a fixed beam-directing device configured to receive the thus-swept input beam and generate at least one output beam which is translated in a principal direction while having an essentially invariant main direction, said at least one output beam being coupled into the panel, thereby forming at least one of said at least two beams that are swept along the touch surface within the sensing area. In one implementation, the beam-directing device comprises an elongate optical element that defines an input focal plane, wherein said axis of rotation is located in said input focal plane. In one implementation, the beam-scanning device is configured to sweep at least two separate input beams along the elongate optical element, each input beam being swept around a separate axis of rotation in said input focal plane, thereby causing the elongate optical element to generate output beams with separate main directions. In one implementation, the beam-directing device further comprises an elongate grating structure which is arranged to generate said at least one output beam as a set of diffracted beams with a predetermined angular spacing.

In the foregoing, the beam-directing device may be arranged to extend along an edge portion of said panel, and the principal direction may be essentially parallel to said edge portion of said panel.

In one embodiment, the illumination arrangement is configured to sweep a first set of mutually acute beams in a first principal direction across the panel, wherein the beams in the first set have a maximum mutual acute angle of ≤30°, and preferably ≤20°. In one implementation, the main direction of one of the beams in the first set is orthogonal to the first principal direction. In one implementation, each pair of beams in the first set has a unique mutual acute angle. Further, the illumination arrangement may be configured to sweep at least one second beam in a second principal direction across the panel. Alternatively, the illumination arrangement may be configured to sweep a second set of mutually acute beams in a second principal direction across the panel, wherein the beams in the second set have a maximum mutual acute angle of ≤30°, and preferably ≤20°. In one implementation, the first set comprises three beams and/or the second set comprises three beams. The main direction of one of the beams in the second set may be orthogonal to the second principal direction, and/or each pair of beams in the second set may have a unique mutual acute angle, and/or the first and second principal directions may be mutually orthogonal.

In the foregoing, the panel may be rectangular, and the first and second principal directions may be parallel to a respective edge portion of the panel.

In one embodiment, the illumination arrangement is configured to sweep the beams angularly across the sensing area and around a respective axis of scanning.

In one embodiment, the illumination arrangement defines a respective incoupling site on the panel for the respective beam, wherein the incoupling and outcoupling sites for each beam are arranged on mutually opposite sides of the sensing area.

In one embodiment, the illumination arrangement is configured to inject beams that are collimated at least in the plane of the panel.

In one embodiment, the illumination arrangement comprises a plate-shaped light guide which is arranged underneath the panel, as seen from the touch surface, and a beam-folding system which is arranged to optically connect the light guide to the panel, and at least one light scanner for sweeping said at least two beams, wherein the light guide is configured to guide light from said at least one light scanner by internal reflection to the beam-folding system.

A second aspect of the invention is an apparatus for determining a location of at least one object on a touch surface, said touch surface being part of a panel that defines the touch surface and an opposite surface, said apparatus comprising: means for introducing at least two beams of radiation into the panel for propagation by internal reflection between the touch surface and the opposite surface, while sweeping each beam along the touch surface within a sensing area, whereby an object that touches the touch surface within the sensing area causes said at least two beams to be temporarily attenuated; means for coupling the beams out of the panel as they are swept along one or more elongate outcoupling sites on the panel downstream of the sensing area; means for measuring the received energy of the respective beam within said one or more outcoupling sites; means for obtaining output signals indicative of the received energy of the respective beam within said one or more outcoupling sites as a function of time; and means for identifying the location of the object based on the output signals.

A third aspect of the invention is a method of determining a location of at least one object on a touch surface, said touch surface being part of a panel that defines the touch surface and an opposite surface, said method comprising the steps of: introducing at least two beams of radiation into the panel for propagation by internal reflection between the touch surface and the opposite surface, while sweeping each beam along the touch surface within a sensing area, whereby an object that touches the touch surface within the sensing area causes said at least two beams to be temporarily attenuated; coupling the beams out of the panel as they are swept along one or more elongate outcoupling sites on the panel downstream of the sensing area; measuring the received energy of the respective beam within said one or more outcoupling sites; obtaining output signals indicative of the received energy of the respective beam within said one or more outcoupling sites as a function of time; and identifying the location of the object based on the output signals.

A fourth aspect of the invention is a method of operating an apparatus for determining a location of at least one object on a touch surface, said touch surface being part of a panel that defines the touch surface and an opposite surface, said method comprising the steps of: operating an illumination arrangement to introduce at least two beams of radiation into the panel for propagation by internal reflection between the touch surface and the opposite surface, and to sweep each beam along the touch surface within a sensing area, whereby an object that touches the touch surface within the sensing area causes said at least two beams to be temporarily attenuated, and whereby each beam is swept along one or more elongate outcoupling sites on the panel downstream of the sensing area; operating at least one light sensor, which is optically coupled to said one or more outcoupling sites, to measure the received energy of the respective beam within said one or more outcoupling sites; obtaining, from said at least one light sensor, output signals indicative of the received energy of the respective beam within said one or more outcoupling sites as a function of time; and identifying, based on the output signals, the location of the object.

A fifth aspect of the invention is a computer program product comprising computer code which, when executed on a data-processing system, is adapted to carry out the method of the fourth aspect.

Any one of the embodiments of the first aspect can be combined with the second to fourth aspects.

Still other objectives, features, aspects and advantages of the present invention will appear from the following detailed description, from the attached claims as well as from the drawings.

Brief Description of Drawings

Embodiments of the invention will now be described in more detail with reference to the accompanying schematic drawings.

Fig. 1A is a side view of an embodiment of a touch-sensing system, Fig. 1B is a top plan view of another embodiment, Figs 1C-1D are graphs of measurement signals generated in the embodiment of Fig. 1B, and Fig. 1E illustrates attenuated light paths reconstructed based on the measurement signals in Figs 1C-1D.

Figs 2A-2C are top plan views of embodiments of touch-sensing systems with exemplifying detection arrangements.

Figs 3A-3C are plan views (right) to illustrate re-direction of the main directions of two beams onto a focal plane, and graphs of corresponding spatial energy distributions (left) in the focal plane. Fig. 3D is a plan view of a touch-sensing system with an alternative detection arrangement.

Fig. 4 is a top plan view of an embodiment of a touch-sensing system with another exemplifying detection arrangement.

Fig. 5A is a top plan view of another embodiment of a touch-sensing system, and Fig. 5B is a side view of the embodiment in Fig. 5A.

Fig. 6A-6E are top plan views of embodiments of touch-sensing systems with exemplifying illumination arrangements.

Fig. 7 is a top plan view of another embodiment.

Figs 8A-8C are top plan views of yet another embodiment, with Fig. 8A illustrating beam sweeps, Fig. 8B illustrating the location of different sensing portions, and Fig. 8C illustrating the mutual beam angle between the beams.

Figs 9A-9B are top plan views of still another embodiment, with Fig. 9A illustrating a beam arrangement and Fig. 9B illustrating the location of different sensing portions.

Fig. 10A is a variant of the embodiment in Fig. 7 resulting in a dual v-scan beam arrangement, Fig. 10B is a variant of the embodiment in Fig. 9 resulting in a dual Ψ-scan beam arrangement, and Fig. 10C illustrates an asymmetric dual Ψ-scan beam arrangement.

Fig. 11 illustrates the location of different sensing portions in an embodiment with a dual v-scan beam arrangement for mutual beam angles of 6°, 12°, 20° and 40°.

Fig. 12 illustrates the location of different sensing portions in an embodiment with a dual Ψ-scan beam arrangement for mutual beam angles of 6°, 12°, 20° and 40°.

Figs 13A-13B are section views of embodiments with folded beam paths.

Figs 14A-14B are section views of embodiments that include a transportation plate underneath the touch-sensitive panel.

Figs 15A-15B are graphs of dispersion functions caused by scattering in a touch-sensing system.

Figs 16A-16D are top plan views of a beam propagating inside a light transmissive panel, serving to illustrate the origin of the dispersion functions in Figs 15A-15B.

Figs 17A-17D are top plan views of a linear beam scan embodiment, to illustrate a reconstruction of attenuation paths.

Figs 18A-18B are top plan views of another linear beam scan embodiment, to illustrate a reconstruction of attenuation paths.

Fig. 19 is a flow chart of an exemplary decoding process.

Fig. 20 is a graph of a dispersion function based on measurement data.

Fig. 21 is a block diagram of an embodiment of a data processor for determining touch locations.

Detailed Description of Example Embodiments

The following description starts out by presenting an example of a touch-sensing system which operates by detecting attenuations of beams of light that are swept inside the panel to propagate by internal reflection from an in-coupling site to an out-coupling site. Exemplifying detection and illumination arrangements are presented. Subsequently, different beam sweeps and mutual arrangements of beams during these sweeps are discussed in detail. Thereafter, exemplifying implementation details are presented, and the influence of signal dispersion caused by scattering in the panel is discussed. Finally, an exemplifying algorithm for determining touch locations is given. Throughout the description, the same reference numerals are used to identify corresponding elements.

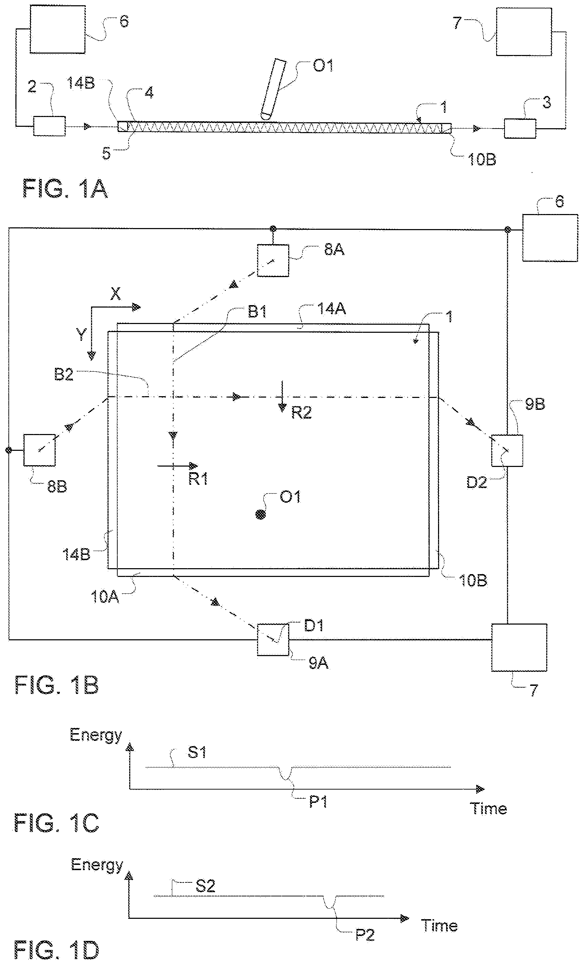

Fig. 1A is a side view of an exemplifying arrangement in a touch-sensing apparatus. The arrangement includes a light transmissive panel 1, one or more light emitters 2 (one shown) and one or more light sensors 3 (one shown). The panel defines two opposite and generally parallel surfaces 4, 5 and may be planar or curved. A radiation propagation channel is provided between two boundary surfaces of the panel, wherein at least one of the boundary surfaces allows the propagating light to interact with a touching object O1. Typically, the light from the emitter(s) 2 is injected to propagate by total internal reflection (TIR) in the radiation propagation channel, and the sensor(s) 3 is arranged at the periphery of the panel 1 to generate a respective measurement signal which is indicative of the energy of received light.

When the object O1 is brought sufficiently close to the boundary surface, part of the light may be scattered by the object O1, part of the light may be absorbed by the object O1, and part of the light may continue to propagate unaffected. Thus, when the object O1 touches a boundary surface of the panel (e.g. the top surface 4), the total internal reflection is frustrated and the energy of the transmitted light is decreased.

The location of the touching object O1 may be determined by measuring the energy of the light transmitted through the panel 1 from a plurality of different directions. This may, e.g., be done by operating a number of spaced-apart emitters 2, by a controller 6, to generate a corresponding number of sheets of directional light inside the panel 1, and by operating one or more sensors 3 to detect the energy of the transmitted energy of each sheet of light. As long as the touching object attenuates at least two sheets of light, the position of the object can be determined, e.g. by triangulation. In the embodiment of Fig. 1A, a data processor 7 is configured to process the measurement signal(s) from the sensor(s) 3 to determine the location of the touching object O1 within a touch-sensing area. The touch-sensing area ("sensing area") is defined as the surface area of the panel that is illuminated by at least two overlapping sheets of light.

As indicated in Fig. 1A, the light will not be blocked by the touching object O1. Thus, if two objects happen to be placed after each other along a light path from an emitter 2 to a sensor 3, part of the light will interact with both objects. Provided that the light energy is sufficient, a remainder of the light will reach the sensor 3 and generate a measurement signal that allows both interactions (touch points) to be identified. Each such touch point has a transmission in the range 0-1, but normally in the range 0.7-0.99. The total transmission T along a light path is the product of the individual transmissions $t_n$ of the touch points on that light path: $T = \Pi\, t_n$. Thus, it may be possible for the data processor 7 to determine the locations of multiple touching objects, even if they are located in line with a light path.

Fig. 1B is a plan view of an exemplary implementation of the arrangement in Fig. 1A. In the implementation of Fig. 1B, two beams B1, B2 are swept across the panel in two different directions, and the energy of each transmitted beam is measured during the sweep. Each beam B1, B2 is suitably collimated at least in the plane of the panel, and may or may not be collimated in the depth direction (i.e. transverse to the plane of the panel. The sweeping of a beam B1, B2 forms a sheet of light inside the panel. Specifically, each beam B1, B2 is generated and swept along an incoupling site on the panel 1 by an input scanner 8A, 8B. In the illustrated example, incoupling sites are located at the left and top edges of the panel 1. The transmitted energy at an outcoupling site on the panel is measured by an output scanner 9A, 9B which is synchronized with the input scanner 8A, 8B to receive the beam B1, B2 as it is swept across the panel 1. In the illustrated example, outcoupling sites are located at the right and bottom edges of the panel 1.

Fig. 1B is an example of a "linear beam scan", in which the respective beam is subjected to a pure translation across the panel, i.e. it has an essentially invariant main direction in the plane of the panel during the sweep. In other words, the "scan angle" of the beam in the plane of the panel is essentially constant. In the illustrated example, the beams B1, B2 are essentially parallel to a respective edge of the panel 1, and thus the sensing area corresponds to the entire surface area of the panel. However, as will be further explained below, the number of beams, their mutual angle, and their angle with respect to the edges of the panel, may be configured otherwise in order to achieve certain technical effects.

Generally, the data processor 7 is configured to determine the position of the touching object(s) from time-resolved measurement signals which are obtained by the output scanners 9A, 9B for each sensing instance. A sensing instance is formed when all beams have been swept once across the sensing area.

Figs 1C-1D are graphs that illustrate the measurement signals S1, S2 generated by the respective output scanner 9A, 9B during a sweep. The measurement signals S1, S2 generally indicate measured energy as a function of time. Essentially, every sampled data point in the measurement signals S1, S2 correspond to a respective light path across the touch panel, the light path extending from an incoupling point in the relevant incoupling site to an outcoupling point in the relevant outcoupling site. As shown, the touching object results in a local decrease P1, P2 in measured beam energy for each sweep. After obtaining the measurement signals S1, S2, the data processor 7 processes them to identify attenuated light paths within the sensing area. The data processor 7 has access to timing information, which directly or indirectly associates time points in the measurement signals S1, S2 with light paths in the sensing area. Typically, for each sheet of light (beam sweep) and based on the measurement signals S1, S2 and the timing information, the data processor 7 generates one or more spatial transmission signals which associate measured energy with locations on the panel, typically the outcoupling points. Thus, the spatial transmission signals represent the received energy at different locations around the perimeter of the panel. The spatial transmission signal could optionally be normalized by a background signal to represent the true transmission of light at the different locations, as will be further exemplified below.

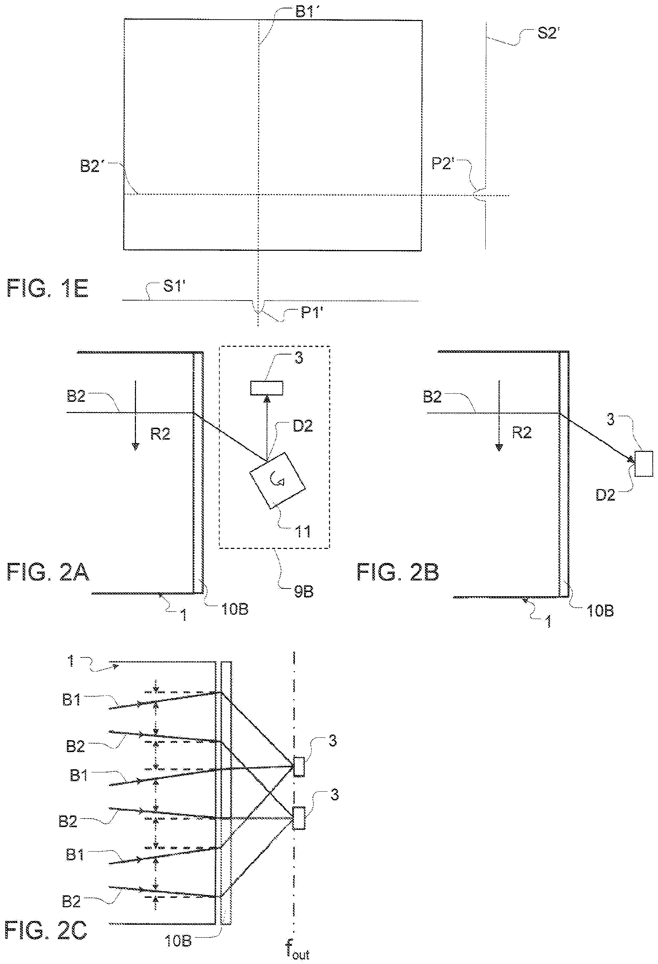

Fig. 1E illustrates the measurement signals S1, S2 converted into spatial transmission signals S1', S2' which are mapped to outcoupling points along the respective panel. The signals S1', S2' are illustrated to contain a respective signal profile P1', P2' that originates from the object O1 (Fig. 1B). Such a signal profile P1', P2' is also denoted "touch signature" in the following.

Subsequent to obtaining the spatial transmission signals, the data processor 7 identifies all touch signatures P1', P2' in the signals S1', S2'. The data processor 7 may have access to trace data that indicates each beam's main direction across the sensing area to each outcoupling point. Such trace data may e.g. be available in the form of a look-up table or a calculation function (algorithm). Thus, for each touch signature P1', P2', the data processor 7 may determine an attenuation path, typically by tracing the center of the touch signature P1', P2' back to the corresponding incoupling point. The location of the object O1 is given by the intersection of the center rays B1', B2'.

There are numerous of ways for the data processor 7 to generate the spatial transmission signals. In a first example, the data processor 7 is connected to the controller 6, to obtain an angle signal which is indicative of the instant angle (deflecting angle) of a beam-sweeping element of the input scanner 8A, 8B. This signal thus provides timing information that relates time points in the measurement signal S1, S2 to deflecting angles. The data processor 7 is operable to associate each deflecting angle with an outcoupling point, e.g. by accessing a look-up table or by applying a calculation function. In a second example, the data processor 7 obtains the timing information by identifying a reference point in the measurement signal S1, S2, the reference point corresponding to a known outcoupling point or deflecting angle. The reference point may e.g. be given by the start or end of the measurement signal S1, S2. Based on this timing information and a known average sweep speed, the data processor 7 is operable to associate time points in the measurement signal with outcoupling points, e.g. by accessing a look-up table or by applying a dedicated calculation function.

The use of the average sweep speed presumes that the sweep speed is essentially constant during the sweep. It should be realized that if the sweep speed varies according to a known sweep function, the data processor 7 may be operable to apply this sweep function to properly associate time points with light paths. This sweep function may be obtained by a calibration procedure. The calibration procedure may involve placing one or more objects at a set of known locations on the touch surface, determining a set of touch points based on the resulting measurement signals, and estimating the sweep function such that the determined touch points match the known locations. Alternatively or additionally, the calibration procedure may be based on optical simulations of the light paths within the system.

In a variation of the second example, the data processor 7 is connected to the controller 6 to receive a signal indicative of one or more reference points. For example, the controller 6 may output a signal that indicates the start and/or end of a sweep.

It should be realized that a linear beam scan facilitates the reconstruction of light paths since all light paths are mutually parallel and extend in a known angle (given by the scan angle) across the sensing area to the outcoupling points. If the scan angle of the beam varies during the sweep, the look-up table/calculation function suitably represents the beam location/direction as a function of outcoupling point or deflection angle. This look-up table/calculation function may be obtained by a calibration procedure, e.g. as described above.

In a variant, full spatial transmission signals are not reconstructed from the measurement signals. Instead, touch signatures are identified in the measurement signals (optionally after aforesaid normalization), whereupon the spatial transmission signals are reconstructed only for the identified touch signatures. In one extreme, only the center point of each touch signature is mapped to a corresponding outcoupling position.

In all above examples, time points are mapped to outcoupling positions, which are then mapped to light paths. In an alternative embodiment, the data processor is configured to directly map time points in the measurement signals to light paths.

On a general level, the above and other embodiments of the invention include an illumination arrangement for introducing two or more beams of radiation into the panel for propagation by internal reflection between the touch surface and the opposite surface, and for sweeping each beam along the touch surface within a sensing area. Thereby, the touch surface is illuminated such that the touching object causes at least two of the beams to be temporarily attenuated, i.e. within a time interval during the respective sweep. On a general level, there is also provided a detection arrangement for coupling the beams out of the panel as they are swept along one or more elongate outcoupling sites on the panel downstream of the sensing area. The detection arrangement generally comprises at least one light sensor which is optically coupled to the one or more outcoupling sites and adapted to measure the received energy of the respective beam within the one or more outcoupling sites. On a general level, there is also provided a data processor which is connected to the detection arrangement and configured to obtain output signals indicative of the received energy of the respective beam within the one or more outcoupling sites as a function of time and to identify the location of the object based on the output signals.

By sweeping beams inside the panel, only a small number of light sources or emitters is required to properly illuminate the touch surface. Further, by causing the data processor to obtain the beam energy received at the outcoupling site as a function of time, the light sensor need not be designed and arranged to generate energy readings for a plurality of spatially separate locations within the outcoupling site, but can instead generate one energy reading that represents the total incident beam energy at the outcoupling site. Thus, the light sensor may be, or be configured to operate as, a 0-dimensional detector, and instead the data processor can be configured to map the energy readings at different time points in the output signals to different spatial locations within the respective outcoupling site. Still further, neither the number of light sources, nor the number of light sensors, is dependent on the surface area of the panel, and thus the touch-sensing apparatus is readily scalable.

Compared to prior art techniques with constant illumination of the entire panel, the illumination arrangement allows for a lower power consumption for a given signal-to-noise ratio since only a small part of the panel is illuminated at a time.

Furthermore, the spatial resolution of the touch-sensing apparatus is given by the sampling rate, i.e. the rate at which measurement data is sampled from each light sensor. This means that any desired resolution could be achieved provided that sufficient amount of light is introduced into the panel. Furthermore, the spatial resolution can be varied during operation of the touch-sensing apparatus, and different spatial resolution can be achieved in different parts of the sensing area.

EXEMPLIFYING DETECTION ARRANGEMENTS

Fig. 2A illustrates an embodiment of a detection arrangement that includes an output scanner 9B of the type indicated in Fig. 1B. In the illustrated embodiment, a fixed elongate re-directing device 10B is arranged to receive and re-direct the incoming beam B2 onto a common detection point D2 while the beam B2 is swept across the sensing area.

In the example of Fig. 2A, the output scanner 9B includes a movable deflection element 11 and a stationary light sensor 3. The deflection element 11 is arranged at the common detection point D2 to deflect the incoming beam B2 onto the sensor 3. Non-limiting examples of suitable deflection elements include a rotating mirror, a resonant mirror, a galvanometer mirror, a MEMS (Micro-Electro-Mechanical Systems) unit, a MOEMS (Micro Opto-Electrical-Mechanical Systems) unit, a liquid crystal, a vibrating mirror, an opto-acoustic unit, etc. The output scanner 9B may also include an aperture stop (not shown) that defines the view angle (numerical aperture) of the sensor 3.

Generally, the re-directing device 10B is an element or assembly of elements which defines an elongate front side optically facing the sensing area. The term "optically facing" is intended to account for the fact that the re-directing device 10B need not be arranged in the plane of the panel 1, but could e.g. be arranged above or beneath the plane to receive a beam that has been coupled out of the panel 1, e.g. via one of the boundary surfaces 4, 5. In any event, as the beam is swept within the sensing area, the beam is also swept along at least part of the front side of the re-directing device 10B. To limit the footprint of the touch-sensing system, the re-directing device 10B may be placed near a periphery portion of the panel 1. For reasons of robustness and mounting precision, the re-directing device 10B may be mounted in contact with such a periphery portion.

In one embodiment, the re-directing device 10B is an optical device that defines a focal plane parallel to and at a distance from its front side. All rays that impinge on the front side at one and the same angle of incidence are directed to a common point D2 in the focal plane. Thus, it should be realized that by sweeping a beam with an essentially invariant main direction along such an optical device 10B, the beam is re-directed onto a well-defined common detection point during the sweep.

The re-directing device 10B makes it possible to separately detect the energy of more than one beam downstream of the sensing area. As will be discussed below, it may be desirable to sweep two or more non-parallel beams in the same direction across the touch surface. Such beams with different main directions will be re-directed onto different detection points by the device 10B. By arranging one or more output scanners in the detection points to deflect the beams onto a respective light sensor, the energy of the beams can be measured separately, even if the beams are swept across the device at the same time.

The re-directing device 10B may be a lens device that transmits and redirects the incoming radiation (as shown in Fig. 2A), or a mirror device that redirects the incoming radiation by reflection. The re-directing device 10B may be made up of diffractive optical elements (DOE), micro-optical elements, mirrors, refractive lenses, and any combination thereof. In one presently preferred embodiment, the re-directing device 10B is a Fresnel component.

The embodiment in Fig. 2A requires the output scanner 9B to be synchronized with the corresponding input scanner 8B (cf. Fig. 1B). This can be achieved by mechanically connecting the deflection elements of each pair of input and output scanners 8B, 9B, or by using a common deflection element in the input and output scanners 8B, 9B. Alternatively, the input and output scanners 8B, 9B are synchronized electronically by control signals from a common controller (e.g. controller 6 as shown in Fig. 1B).

Fig. 2B illustrates an embodiment of a detection arrangement which is identical to the arrangement in Fig. 2A, except that the output scanner 9B is replaced by a light sensor 3, which is arranged with its light-sensing surface at the detection point D2. Compared to the arrangement in Fig. 2A, the light sensor 3 need to be capable of receiving light over a larger solid angle.

Like in Fig. 2A, the re-directing device 10B makes it possible to separately detect the energy of more than one beam downstream of the sensing area. As mentioned above, two or more beams that are swept across the re-directing device 10B with different main directions will be re-directed onto different detection points. Fig. 2C illustrates such an embodiment, in which two light sensors 3 are arranged in the focal plane $f_{out}$ of the device 10B to separately measure the energy of the beams B1, B2.

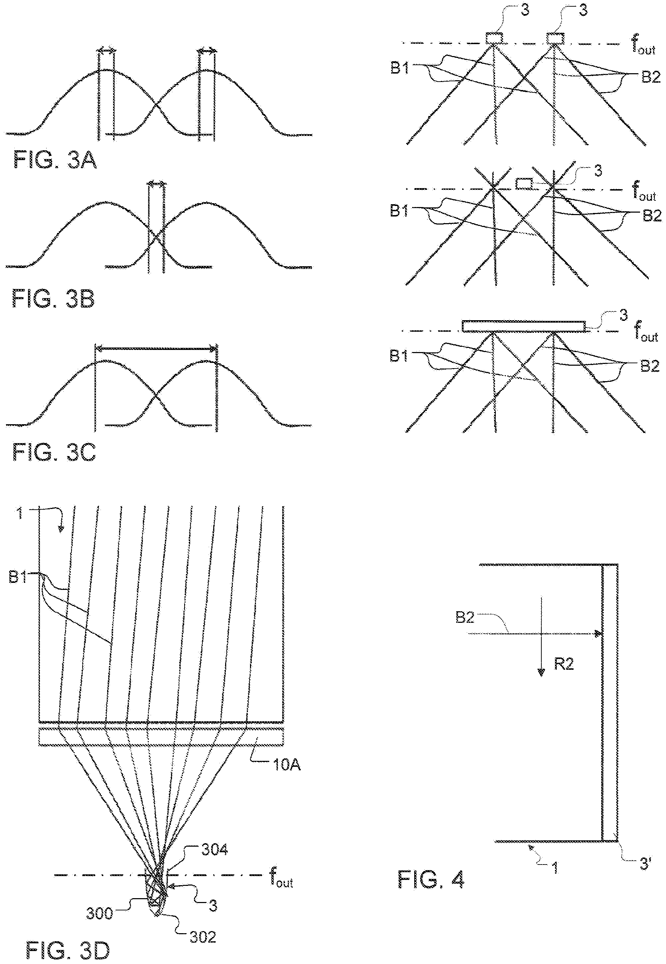

The placement of the sensors 3 in the focal plane $f_{out}$ should account for the fact that beams generally have an extended beam profile when they hit the re-directing device 10B, and thus the re-directing device 10B redirects the beams to a detection area rather than a detection point in the focal plane $f_{out}$. This phenomenon is further illustrated in Fig. 3. The right-hand portion of Fig. 3A shows the main directions of two beams B1, B2 at three time points during a sweep, with the main directions of the two beams being re-directed onto a respective detection point in the focal plane $f_{out}$. The left-hand portion of Fig. 3A illustrates the energy distribution of the beams in the focal plane, with arrows indicating the width and placement of the sensors 3. As shown, with sufficient separation between the sensors 3, it is possible to measure the energy of each beam separately, thereby allowing the beams to be swept concurrently along the re-directing device 10B. It is to be noted that the beam energy can be measured even if the sensors 3 are not placed at center of each beam profile, i.e. at the detection point for the main direction. Further it is to be understood that the light-sensing surface area of the sensor 3 can be optimized to maximize the fraction of the total energy that is measured while minimizing cross-talk between the beams. Fig. 3B corresponds to Fig. 3A, but illustrates the use of a single sensor 3 to measure the energy of both beams. Here, one relatively small sensor 3 is arranged between the detection points for the main directions. Due to the beam profile, the sensor 3 is capable of measuring the energy of both beams. Fig. 3C corresponds to Fig. 3A, but illustrates the use of a larger sensor 3 to measure the energy of both beams. This embodiment will increase the detected fraction of the beam energy, but the increased surface area of the sensor 3 may also result in increased detection of noise. It is to be understood that the embodiments in Figs 3B-3C require the beams to be swept sequentially along the re-directing device 10B.

In the embodiments shown in Figs 2A-2C, the re-directing device 10B operates as an angular filter with respect to the sensor(s) arranged in the focal plane, since only light that impinges on the front side of the device 10B within a confined range of angles will be directed onto the sensor(s) 3. Thus, the device 10B will limit the effective view angle or numerical aperture of the sensor 3, and thereby limit the amount of undesired background light that reaches the sensor 3. Such background light may include ambient light or light scattered within the panel 1.

It is to be understood that the re-directing device 10B can be arranged to re-direct a beam even if the main direction of the beam varies during the sweep. For example, variations in the main direction of a beam may be caused by inaccuracies or tolerances in the illumination arrangement. Generally, such unintentional scan angle variations do not exceed $\pm 2°$. Suitably, the detection arrangement is designed such that the view angle of the sensor exceeds the expected variations.

As will be shown in the following, the sensor 3 may be modified to better accommodate for such scan angle variations. Even if unintentional scan angle variations are known to occur in commercial implementations, the re-directing device 10A, 10B is generally designed by assuming that the main direction is invariant during the sweep. Such a mismatch between design and reality causes the main direction of the beam to be re-directed onto an extended detection area around a nominal detection point in the focal plane. This means that the location of the beam profile in the focal plane (see Figs 3A-3C) will vary during a beam sweep. It is realized that the measured energy is then dependent on the placement of the sensor in relation to the nominal detection point, the size of the sensor's light-sensing surface, the width of the beam profile, and the variations in beam profile location during a sweep. To suppress noise, it may be desirable to use a sensor with a small light-sensing surface. However, with a small light-sensing surface, variations in beam profile location may result in significant variations in measured beam energy. Although it is possible to compensate for such variations, the measured energy may be too low to allow for a sensible position determination.

This problem is further illustrated in Fig. 3D, which shows the main direction of the beam B1 at different time points during the sweep. As indicated, variations in the main direction cause the beam B1 to be directed to different points in the focal plane $f_{out}$ during the sweep. To ameliorate this problem, the sensor 3 is provided with a stationary concentrator 300 (shown in cross-section), which is placed between the re-directing device 10A and the light-sensing surface 302 of the sensor 3. In the example of Fig. 3D, the concentrator 300 comprises an internally reflecting cylindrical shell 304 which surrounds and is aligned with the light-sensing surface 302. The shell 304 defines an opening that is arranged to receive the re-directed beam B1, which is then directed, by one or more reflections inside the shell 304, onto the light-sensing surface 302. The concentrator 300 increases the effective light-sensing area of the sensor 3. In one implementation, the shell 304 is made of plastic and has an internal layer of reflective material. In one specific implementation, the concentrator 300 is configured as a compound parabolic concentrator (CPC). In yet another variant (not shown), the concentrator 300 in Fig. 3D is implemented by a wide-angle lens.

In another variant (not shown), the concentrator 300 in Fig. 3D is replaced by a diffusing element or plate, which is arranged between the re-directing device 10A and the light-sensing surface 302 of the sensor 3, preferably in the focal plane $f_{out}$ of the device 10A. The diffusing element will transmit and scatter the incoming radiation over a large solid angle, thereby allowing a fraction of the incoming radiation to be detected by the light-sensing surface 302 even though the light-sensing surface 302 is smaller than the detection area on the diffusing element.

In alternative embodiments, the illumination arrangement may be designed to intentionally vary the main direction of one or more beams during the sweep, e.g. to provide certain touch-sensing properties in certain parts of the sensing area. As long as the intended variations of the main direction along the re-directing devices 10A, 10B are known, it is possible to design the device 10A, 10B to re-direct the main direction of the beam onto a common detection point, with or without the use of a concentrator/diffusing element. However, the design of the device 10A, 10B is simplified if the main direction is essentially invariant during the sweep, in particular if two or more beams are to be re-directed by one and the same device 10A, 10B.

Fig. 4 illustrates another embodiment of a detection arrangement in a touch-sensing system. The detection arrangement comprises an elongate sensor device 3' which is arranged to receive and measure the total energy of a beam as it is swept within the sensing area. Generally, the elongate sensor device 3' is a single sensor element, or an assembly of sensor elements, which defines an elongate front side optically facing the sensing area. As the beam is swept within the sensing area, the beam is also swept along at least part of the front side of the sensor device 3', which thereby generates a measurement signal that indicates the total beam energy received by the sensor device 3' as a function of time. It is to be understood that the detection arrangement in Fig. 4 may be space-efficient, simple, robust and easy to assemble.

If two or more non-parallel beams are to be swept in the same direction across the touch surface, these beams need to be swept sequentially, since the detection arrangement in Fig. 4 measures the total beam energy and thus does not discriminate between different beams.

The sensor device 3' may be a 0-dimensional light sensor, i.e. a sensor that only measures the total incident light energy on its front surface, e.g. a photo-detector. Alternatively, the sensor device 3' may be a 1- or 2-dimensional sensor, such as a CCD or CMOS sensor or a row of individual photo-detectors, wherein a signal indicative of the total beam energy as a function of time is obtained by summing or averaging the readings of individual sensing elements (pixels/photo-detectors) of the 1- or 2-dimensional sensor.

To limit the footprint of the touch-sensing system, the sensor device 3' may be placed near a periphery portion of the panel 1. For reasons of robustness and mounting precision, the sensor device 3' may be mounted in contact with such a periphery portion.

It is to be understood that the detection arrangement shown in Fig. 4 may be installed at more than one edge of the panel 1 to measure the total energy of one or more beams. For example, the detection arrangement may be installed at the bottom and right edges of the panel in Fig. 1B, to replace the output scanners 9A, 9B and re-directing devices 10A, 10B.

The detection arrangement of Fig. 4 may also be installed in touch-sensing systems which operate with "angular beam scan", i.e. in which a respective beam is swept inside the panel 1 around a rotational axis.

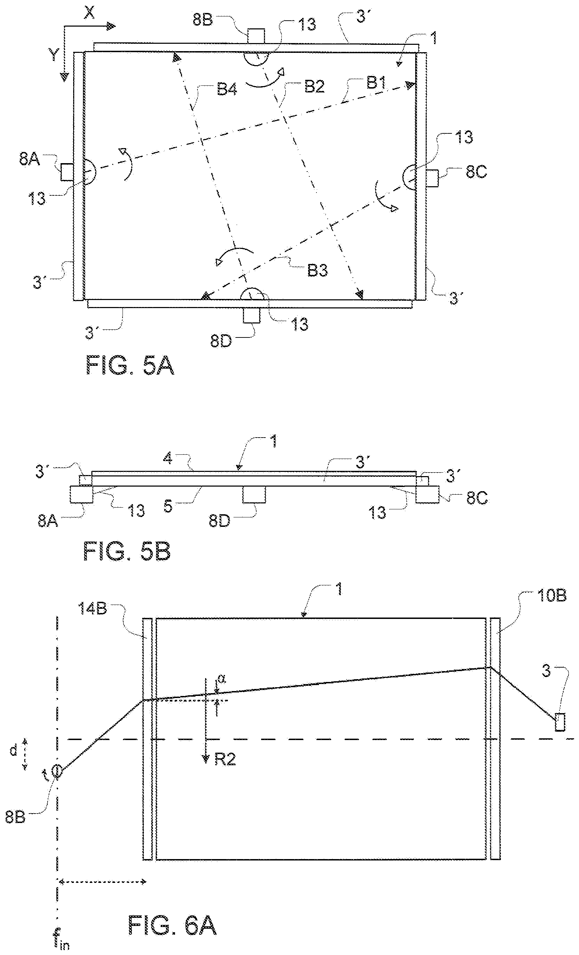

Figs 5A-5B is a top plan view and an elevated side view, respectively, of an embodiment of such a touch-sensing system with four input scanners 8A-8D arranged at the midpoint of a respective edge of the touch panel 1. Each input scanner 8A-8D generates a beam B1-B4 which is injected into the panel 1 via a coupling element 13 and rotates the beam B1-B4 around a rotational axis such that the beam B1-B4 is swept across the entire touch surface 4. Four sensor devices 3' are attached to the edges of the panel 1 to receive the respective beam B1-B4 and measure its total energy as it is swept across the touch surface 4. Thus, the sensor devices 3' generate measurement signals that are representative of transmitted beam energy as a function of time for each beam B1-B4. To allow the sensor device 3' to extend along the entire side of the touch surface, and to maximize the sensing area, light is injected through the lower boundary surface 5 via the coupling elements 13 (Fig. 5B).

The detection arrangements in Figs 4-5 generally operate with a large view angle and may thus also collect ambient light incident on the outcoupling points. To this end, the touch-sensing device may contain means for suppressing ambient light (not shown). In one embodiment, a spectral passband filter is arranged between the outcoupling positions and the sensor device 3', e.g. on the front side of the sensor device. The spectral filter is matched to transmit a major portion of the light in the beam(s) and to block a major portion of ambient light. In another embodiment, each input scanner is controlled to emit modulated light at a known modulation frequency and ambient light is suppressed by electronic filtering of the measurement signal of each sensor device 3'. In one implementation, the measurement signal is processed for lock-in detection or heterodyne detection at the modulation frequency to isolate the energy originating from the beam. In another implementation, the measurement signal is passed through a dedicated bandpass filter with cut off frequencies tailored to remove all frequency components that are not close to the modulation frequency. The different implementations of electronic filtering can be effected by digital signal processing in the data processor 7 (Fig. 1), using software and/or hardware components. Alternatively, the electronic filtering may be carried out by dedicated analog electronics. It is to be understood that similar means for filtering may be included in any of the other embodiments of detection arrangements disclosed herein.

It should be understood that the detection arrangements in Figs 2A-2B also may be used to detect the energy of angularly swept beams. As long as the main direction of the beam along the re-directing device 10A, 10B is known, it is possible to design the re-directing device 10A, 10B to re-direct the main direction of the beam onto a common detection point D1, D2.

EXEMPLIFYING ILLUMINATION ARRANGEMENTS

As already indicated above, the illumination arrangement may include an input scanner 8A-8D. Generally, the input scanner 8A-8D comprises a light source and at least one movable deflection element which is controllable to deflect a beam of light from the light source in a desired direction around an axis of rotation. Thus, the input scanner generates an angular beam scan. Non-limiting examples of such deflection elements include a rotating mirror, a resonant mirror, a galvanometer mirror, a MEMS (Micro-Electro-Mechanical Systems) unit, a MOEMS (Micro Opto-Electrical-Mechanical Systems) unit, a liquid crystal, a vibrating mirror, an opto-acoustic unit, etc.

The illumination arrangement may be configured to generate a linear beam scan. In the example of Fig. 1A, the touch-sensing system comprises an illumination arrangement, in which each of two input scanners 8A, 8B generates and sweeps a beam B1, B2 along an elongate fixed beam-directing element 14A, 14B that is designed and arranged to output the beam B1, B2 with a desired main direction in the plane of the touch surface 4.

Generally, the beam-directing device 14A, 14B is an element or assembly of elements which defines the output direction of the beam for a given input direction thereof. The device 14B need not be arranged in the plane of the panel 1, but could e.g. be arranged above or beneath the plane to inject the beam into the panel 1 via a coupling element (cf. 13 in Fig. 5). To limit the footprint of the touch-sensing system, the beam-directing device 14A, 14B may be placed near a periphery portion of the panel 1. For reasons of robustness and mounting precision, the device 14A, 14B may be mounted in contact with such a periphery portion.

In one embodiment, the beam-directing device 14A, 14B is an optical device that defines a focal plane parallel to and at a distance from its input side. Thus, all rays that originate from a point in the focal plane and impinge on the input side of the device 14A, 14B will be output in the same direction. Fig. 6A illustrates a touch-sensing system, in which the rotational axis of the input scanner 8B is located in the focal plane $f_{in}$ of the beam-directing device 14B, which thereby converts the angular beam scan of the input scanner 8B to a linear beam scan in a direction parallel to the device 14B. As indicated, the angle $\alpha$ between the main direction of the output beam and the optical axis (dashed line) of the device 14B is given by the displacement d of the rotational axis from the focal point of the device 14B (given by the intersection between the focal plane $f_{in}$ and the optical axis of the device 14B).

The beam-directing device 14A, 14B may be a lens device that transmits and redirects the incoming radiation (as shown in Fig. 6A), or a mirror device that redirects the incoming radiation by reflection. The device 14A, 14B may be made up of diffractive optical elements (DOE), micro-optical elements, mirrors, refractive lenses, and any combination thereof. In one presently preferred embodiment, the beam-directing device is a Fresnel component.

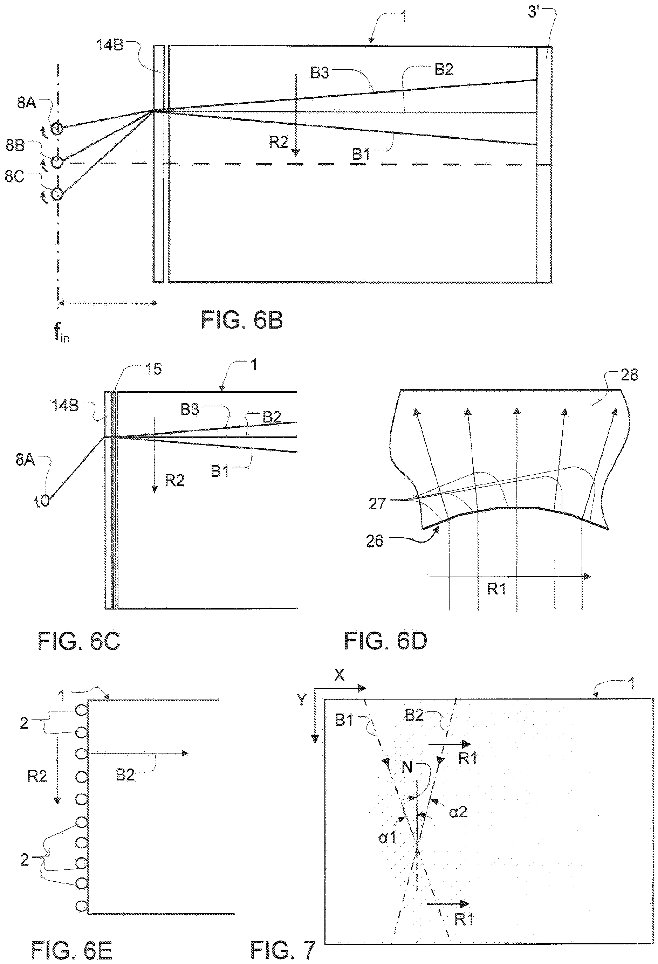

The beam-directing device 14B in Fig. 6A can be used to sweep a plurality of beams across the touch surface in the same sweep direction but with different main directions (scan angles). This can be accomplished by arranging the rotational axes of a plurality of angular beam scans at different locations in the focal plane $f_{in}$ of the beam-directing device 14B. Such an embodiment is shown in Fig. 6B, in which three input scanners 8A-8C are arranged with their rotational axes in the focal plane $f_{in}$. It is to be understood that the illumination arrangement in Fig. 6B may be space-efficient, simple, robust and easy to assemble while providing a well-defined mutual angle between the beams. Further, it allows the beams B1-B3 to be swept concurrently across the sensing area, if allowed by the detection arrangement. In Fig. 6B, however, the detection arrangement requires the input scanners to be activated sequentially, since the elongate sensor device 3' does not discriminate between the beams B1-B3.

Fig. 6C illustrates an alternative or supplementary configuration of an illumination arrangement for generating a linear translation of a set of beams B1-B3 with well-defined mutual angles. In the embodiment of Fig. 6C, an angular scan is generated by an input scanner 8A around a rotation axis located in the focal plane of the beam-directing device 14B. The output beam of the device 14B, which output beam suitably has an essentially invariant main direction, is received by a transmission grating 15, which generates a zero-order beam B2 as well as first-order beams B1, B3 on the sides of the zero-order beam. Although not shown on the drawings, the grating may be designed to generate beams of higher orders as well. The mutual angles between the different beams B1-B3 are determined by the properties of the grating according to the well-known grating equation:

$$d_s \cdot (\sin \theta_m + \sin \theta_i) = m \cdot \lambda,$$

with $d_s$ being the spacing of diffracting elements in the grating, $\theta_i$ being the angle of incidence of the beam that impinges on the grating, m being the order, $\lambda$ being the wavelength of the radiation, and $\theta_m$ being the angle between each the beam of order $m$ and the normal direction of the grating. The grating equation is generally applicable to all types of gratings.

The use of a grating 15 in combination with a beam-directing device 14B provides an illumination arrangement with the potential of being space-efficient, simple, robust and easy to assemble while providing a well-defined mutual angle between the beams. Further, it allows the beams B1-B3 to be swept concurrently across the sensing area. It is to be understood that further beam directions may be generated by providing more than one angular scan and arranging the rotational axes of the angular scans in the focal plane $f_{in}$ of the beam-directing device 14B, e.g. as shown in Fig. 6B.

In the illustrated embodiments, the grating 15 is arranged downstream of the device 14B. This will cause the grating 15 to be swept by a beam with an essentially invariant main direction, so that the set of beams B1-B3 generated by the grating 15 are also swept with essentially invariant main directions within the sensing area. However, the grating 15 may alternatively be arranged upstream of the device 14B, if the detection arrangement is configured to accept larger variations in the main directions of the beams B1-B3 during the sweep.

It is to be understood that the above-mentioned grating 15 may be integrated in the beam-directing device 14B, be it a lens device or a mirror device. As an alternative to a transmission grating, a reflective grating may be used.

As an alternative or complement to a grating, the beam-directing device 14B may itself be configured to generate a set of output beams with well-defined mutual angles, based on a single input beam. Such a beam-directing device 14B may comprise a set of elongate beam-directing segments (not shown) arranged on top of each other in the depth direction, where each beam-directing segment is arranged to generate an output beam in a unique direction, when swept by an input beam of at least the same width as the beam-directing device 14B in the depth direction. In one implementation, the focal points of the different beam-directing segments may be located at different positions in the input focal plane $f_{in}$. For example, the segments may all be designed from a basic beam-directing segment which is shifted in its longitudinal direction to form the different segments of the beam-directing device 14B. Instead of being arranged on top of each other, the beam-directing segments may be superimposed on each other in the beam-directing device 14B.

As yet another alternative or complement to a grating, an elongate prism structure may be arranged intermediate the beam-directing device 14B and the panel edge/coupling element, wherein the prism structure comprises a repeating prism element in the longitudinal direction. Fig. 6D illustrates an example of such a prism element 26, which has five differently inclined, planar prism surfaces 27, whereby the input beam is directed in five different directions as it is swept (in direction R1) along the prism structure. In the illustrated example the prism element 26 is formed as an indentation in a surrounding material 28. Alternatively, the prism element 26 may be formed as a projection from the surrounding material 28. The prism structure may be provided as a separate component, or it may be integrated in the panel edge or the coupling element.

Yet another illumination arrangement for sweeping beams within a sensing area is illustrated in Fig. 6E. Here, an array of light sources 2 is arranged alongside an edge of the panel 1 to inject a respective beam of light into the panel. By sequentially activating the light sources 2 (e.g. by means of controller 6, Fig. 1A), a linear beam scan in direction R2 is generated. The beams from the light sources may be collimated, diverging or converging in the plane of the panel 1. If the beams are collimated, the aforesaid grating 15, and/or any of the above-mentioned alternatives, may be provided between the light source 2 and the panel 1 to convert the beam from each light source into a set of beams with well-defined mutual angles. Similarly to other embodiments described herein, timing information can be made available to the data processor (7 in Fig. 1), enabling it to convert time points to light paths.

EXEMPLIFYING BEAM ARRANGEMENTS

In the following, touch-sensing systems with linear beam scans will be discussed in further detail. In particular, different arrangements of beams within the sensing area will be discussed with reference to Figs 7-12. Since these figures focus on the beam arrangement with respect to the panel, most hardware components have been omitted. It is to be understood that the illustrated systems can be implemented by the same or a similar combination of components as described above with reference to Figs 1-4 and 6.

As will be further explained below, different beam arrangements within the panel may provide different characteristics to the touch-sensing system, e.g. with respect to the precision in detecting touch locations, the number of touch locations that can be detected within a sensing instance, the technical complexity of the system, the footprint of the system, the relative size of the multi-touch sensing area to the total surface area of the panel, etc.

In the illustrated beam arrangements, it is to be understood that the beams do not physically intersect over the entire panel. Instead, radiation paths and points of intersection between the radiation paths can be reconstructed when each of the beams has been swept across the panel.

Furthermore, it is to be understood that the following discussion about beam directions refers to the main direction of each beam, which is a straight symmetry line that extends in the panel from the beam injection site, as seen in a plan view of the panel.

Still further, in the context of the present application, a "sweep direction" refers to a principal direction that includes a certain direction (R) and its opposite direction (-R).

In the Figures, a Cartesian coordinate system has been introduced, with the coordinate axes X,Y being parallel to the sides of the rectangular panel. This is only for the purpose of illustration, and the touch locations can be represented in any type of coordinate system, e.g. polar, elliptic, parabolic, etc.

In one beam arrangement, one or more of the beams is non-perpendicular to its sweep direction. Furthermore, the sweep direction may be the same for both beams. Fig. 7 illustrates an example of such a beam arrangement in which two non-parallel beams B1, B2 are translated in the same sweep direction R1 across a sensing area, the main direction of each beam defining a respective angle $\alpha1$, $\alpha2$ to the normal N of the sweep direction R1. This type of beam arrangement with two non-parallel beams B1, B2 that are swept in one and the same direction R1 across a sensing area is denoted "v-scan" in the following. In the illustrated embodiment, as well as in all other embodiments, the beams B1, B2 may be introduced from opposite sides of the sensing area or on the same side. In the illustrated v-scan embodiment, the sensing area (indicated by hatched lines) is a subset of the surface area of the panel 1.

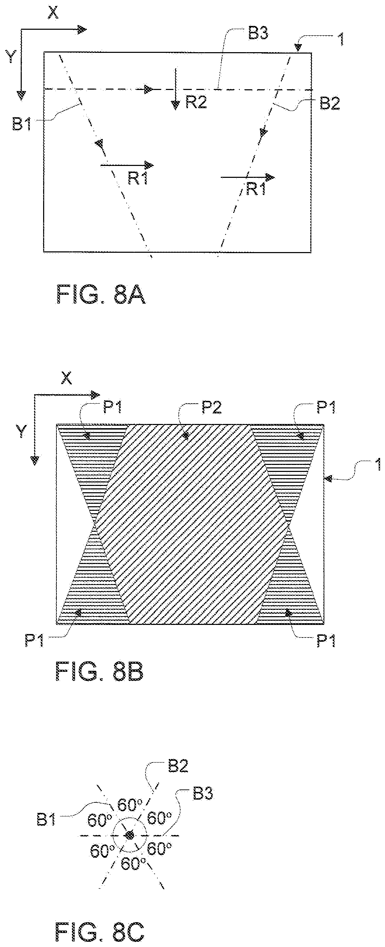

The ability of the touch-sensing system to detect the location of a plurality of objects touching the sensing area within a sensing instance is improved by sweeping more than two beams across the sensing area. Example embodiments that enable this so-called "multi-touch" functionality will now be described with reference to Figs 8-12.

Fig. 8A-8B illustrates an embodiment in which three beams B1-B3 are swept across the sensing area. Fig. 8A shows that two non-parallel beams B1, B2 are translated in a first sweep direction R1, and a third beam B3 being swept in a second sweep direction R2 which is perpendicular to the first sweep direction.

In the illustrated example, the first and second sweep directions R1, R2 are parallel to the sides of the panel. This has been found to facilitate the design of the system. For example, as described in the foregoing, an elongate beam-directing element (e.g. 14B in Fig. 6A) may be arranged along the side of the panel 1 to define the main beam direction in the panel as a beam is swept along the beam-directing element. Thus, for a panel that is defined by linear periphery portions (sides/edges), it may generally be desirable for each sweep direction to be essentially parallel to a respective periphery portion.

In Fig. 8A, the beams B1-B3 form a v-scan in the X direction and a single scan in the Y direction. In the illustrated example, the beams B1, B2 have equal but opposite angles to the normal of the sweep direction R1. The beam swept in the Y direction is orthogonal to its sweep direction R2. Thereby, as shown in Fig. 8B, the sensing area of the panel comprises a number of first sub-portions P1, in which each point of intersection is formed by two beams, and a central second sub-portion P2, in which each point of intersection is formed by three beams. In one specific embodiment, the beams B1-B3 are essentially equiangular within the second sub-portion P2. Such a beam arrangement maximizes the mutual angle between the beams. A large mutual angle may improve the precision of the detected touch locations, at least in some implementations. By "equiangular beams" is meant that, in each point of intersection, the main directions of the beams are equally distributed over 360°. In this example, as shown in Fig. 8C, the beams intersect with a mutual angle of 60° ($\alpha1=\alpha2=30°$).

Although it may be desirable for the beams to be equiangular within the sensing area, such a beam arrangement may restrict the sensing area to the central portion of the panel (cf. sub-portion P2), whereas the remainder of the total panel surface is wasted. Thus, the footprint of the touch-sensing system may become excessive in relation to the size of the sensing area.

However, as indicated above, there are sub-portions (cf. sub-portion P1) outside the central portion that are swept by two beams, albeit not in an equiangular configuration. These sub-portions may also offer touch-sensitivity. However, the performance may differ between the central portion and these sub-portions, e.g. with respect to the precision that can be attained in the determination of the location of each object, as well as the number of simultaneous touches that can be discriminated. The overall performance of the system may be improved by increasing the number of beams that are swept across the panel, but increasing the number of beams will also increase the number of sub-portions that are swept by a different number of beams. Thus, differences in performance may prevail across the panel. Furthermore, it may be desirable to avoid sweeping more than about 6-10 beams across the panel. As the number of beams increases, so does the cost, the technical complexity and possibly the footprint of the system. Furthermore, since the sampling rate of the processing system is normally constant at a certain price point, increasing the number of beams will decrease the number of samples per beam scan. It is also possible that the measured signal level for each sample decreases with an increased number of beams.

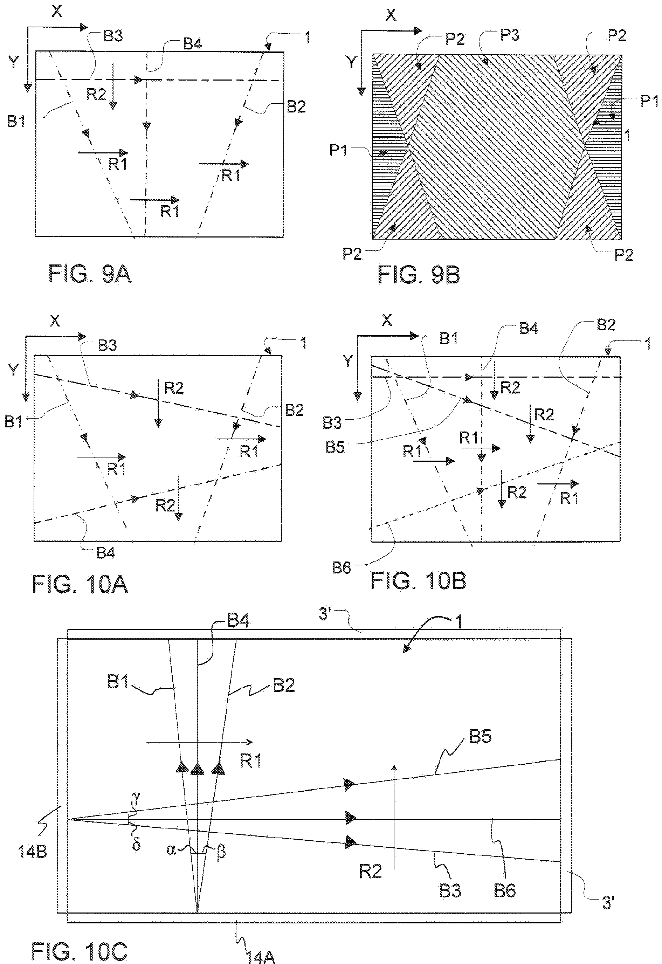

Fig. 9A illustrates a variant of the embodiment in Fig. 8A, in which one further beam B4 is additionally swept in the X direction. In the illustrated example, this beam is orthogonal to its sweep direction R1, and thus parallel to a pair of opposite sides of the panel, whereby the sensing area is extended to the entire panel 1. As shown in Fig. 9B, the sensing area comprises two first sub-portions P1, in which each point is swept by two beams, and four adjacent second sub-portions P2, in which each intersection point is formed by three beams, as well as a central third sub-portion P3, in which each intersection point is formed by four beams. In this embodiment, the equiangular beams are supplemented by an additional beam B4 in order to expand the extent of the sensing area. This expansion is achieved by sweeping a combination of a v-scan (B1 and B2) with an orthogonal beam (B4) in one direction R1 across the panel. This combination of beams is denoted "Ψ-scan" in the following. It should also be noted, by comparing Fig. 9B and Fig. 8B, that the overall performance of the panel has been increased since all sub-portions are swept by a greater number of beams. However, there may still be differences in performance across the panel.

Fig. 10A illustrates a variant of the embodiment in Fig. 7, wherein each of the X and Y directions is swept by two mutually non-parallel beams, i.e. a v-scan, and Fig. 10B illustrates a variant of the embodiment in Fig. 9, wherein each of the X and Y directions is swept by two mutually non-parallel beams and an orthogonal beam, i.e. a Ψ-scan.

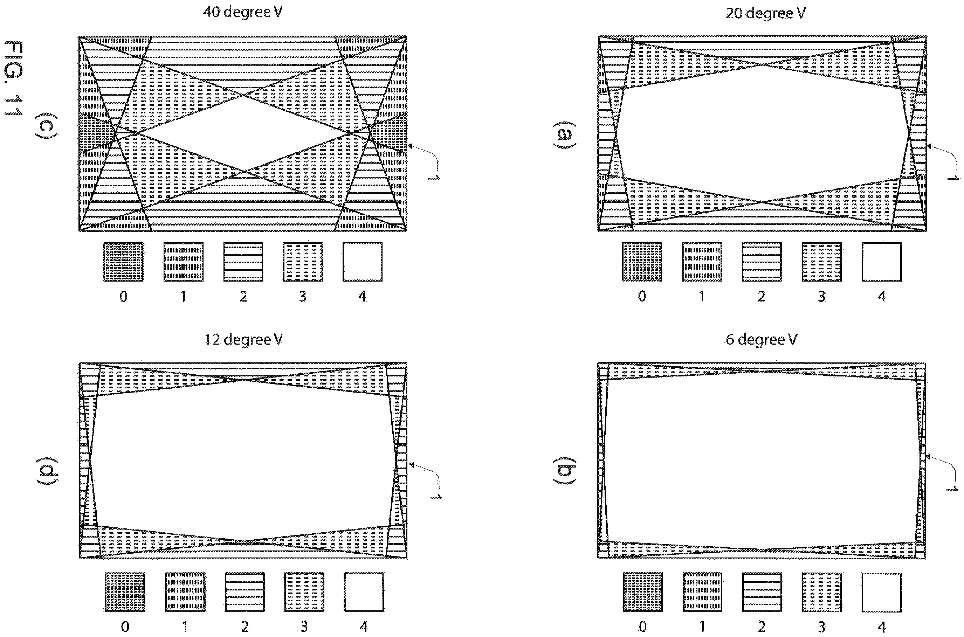

Fig. 11 illustrates the location of different sub-portions on a rectangular panel swept by four beams in the dual v-scan configuration shown in Fig. 10A. Specifically, Fig. 11 shows how the extent and location of these sub-portions changes when a different mutual angle is set up between the beams in each v-scan (i.e. the angle between beams B1 and B2, and between beams B3 and B4, respectively in Fig. 10A). At a mutual beam angle of about 20° (Fig. 11(a)), a major part of the panel is swept by four beams. Thus, the performance of the system is the same over a large part of the panel. Reducing the mutual beam angle further, increases the extent of the central sub-portion and decreases the size of the other sub-portions. At an angle of about 12°-15° (cf. Fig. 11(d)), there are essentially no sub-portions that are swept by less than two beams, and thus the entire panel is touch-sensitive. At an angle of about 2°-8° (cf. Fig. 11(b)), the entire panel can be considered to present an essentially uniform performance. Although the performance of the system is reduced as the mutual angle is decreased, it has been found that adequate performance can be achieved at mutal acute angles from about 2° up to about 30°.

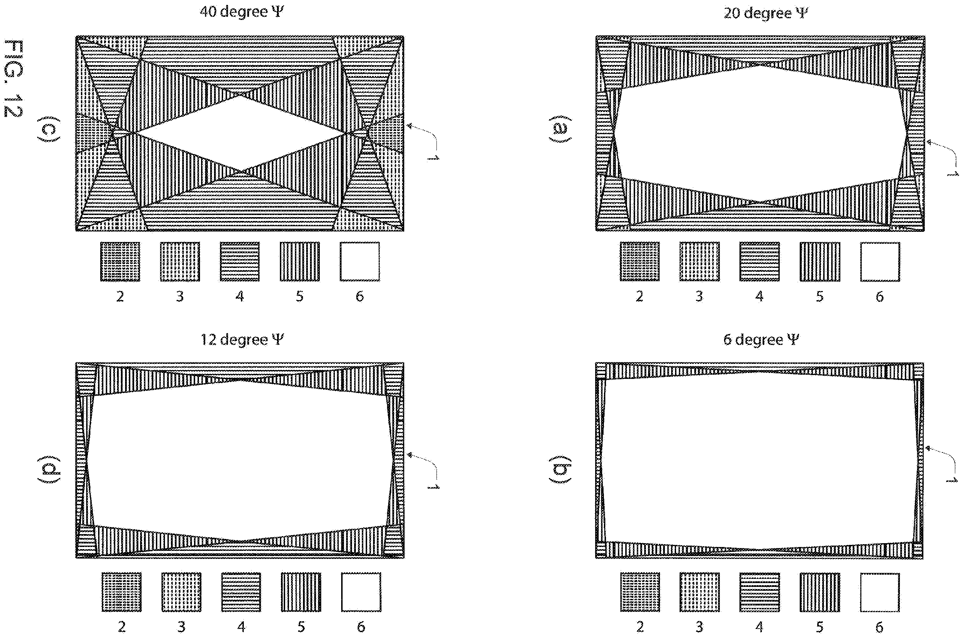

Fig. 12 illustrates the location of different sub-portions on a rectangular panel swept by six beams in the dual Ψ-scan configuration shown in Fig. 10B. Fig. 12 shows the influence of the maximum mutual angle between the beams in each Ψ-scan (i.e. the angle between beams B1 and B2, and between beams B5 and B6, respectively in Fig. 10B. The distribution and size of the sub-portions do not differ between Fig. 12 and Fig. 11. However, with a dual Ψ-scan, each sub-portion is swept by two more beams, which serves to increase the performance of the system. For example, the ability of the system to detect multiple touches is enhanced, and already at a mutual angle of about 12°-15° (cf. Fig. 12(d)), there are essentially no sub-portions that are swept by less than four beams.

Generally, a v/Ψ-scan involves sweeping at least one set of mutually acute beams in a given sweep direction across the panel, wherein the beams included in the set have a maximum mutual acute angle of $\leq 30°$, and preferably $\leq 20°$. In a v-scan, there are two beams in each set, and in a Ψ-scan there are three beams in each set. In a Ψ-scan, the main direction of one of these beams is preferably orthogonal to the sweep direction.

One benefit of having the central beam in a Ψ-scan orthogonal to the sweep direction is that the central beam will be swept over the whole panel, at least if the panel is rectangular. Compared to a dual v-scan, the two central beams of a dual Ψ-scan may be swept across the entire panel, and this may result in a significant improvement in performance at the periphery of the panel.

A general advantage of using v- and Ψ-scans is that suitable performance of the touch-sensing system can be attained by sweeping only a few beams across the panel. Furthermore, both v- and Ψ-scans can be realized by space-efficient, simple and robust combinations of components, for example by the illumination and/or detection arrangements as described herein.

It has surprisingly been found that an asymmetric beam arrangement may enable determination of a greater number of touch locations for a given number of beams, and/or improve the robustness in determining touch locations. Such an asymmetric beam arrangement may be obtained by arranging at least three beams such that each pair of beams defines a unique mutual acute angle. For example, each pair of beams in a set of beams forming a Ψ-scan may have a unique mutual acute angle. In another variant, an asymmetric beam arrangement is obtained by arranging at least two beams such that they have different angles to a common sweep direction (e.g. $\alpha1 \neq \alpha2$ in Fig. 7).

Fig. 10C illustrates a dual Ψ-scan arrangement that may be asymmetric by proper choice of mutual acute angles between the beams B1-B6. In the terminology of Fig. 10C, the mutual acute angles are given by $\alpha$, $\beta$ and $(\alpha+\beta)$ in one set of beams (B1, B2 and B4), and by $\gamma$, $\delta$ and $(\gamma+\delta)$ in the other set of beams (B3, B5 and B6). Thus, a suitable asymmetric beam arrangement is obtained when $\alpha \neq \beta$ and/or $\gamma \neq \delta$. The asymmetric properties may be improved further by selecting $\alpha \neq \beta \neq \gamma \neq \delta$, and even further by selecting $\alpha \neq \beta \neq \gamma \neq \delta \neq (\alpha+\beta) \neq (\gamma+\delta)$. An even more asymmetric beam arrangement is obtained when $\alpha$, $\beta$, $\gamma$ and $\delta$ are selected such that all mutual acute angles defined between the beams B1-B6 are unique. In one such non-limiting example, $\alpha$ =6°, $\beta$=8°, $\gamma$=7° and $\delta$=5°. If the panel is rectangular, with mutually opposite long sides and short sides, the asymmetric properties may be chosen such that the set of beams (B3, B5 and B6) that is swept orthogonally to the long sides of the panel (i.e. in direction R2) has a smaller maximum acute mutual acute angle than the other set of beams (B1, B2 and B4), i.e. $(\gamma+\delta)<(\alpha+\beta)$. Such a beam arrangement may increase the sensing area of the panel compared to other asymmetric dual Ψ-scan arrangements.

It should also be noted that any one of the beam arrangements described in the foregoing may be combined with further beams that do not comply with any one of the above design principles. For example, a set of equiangular beams may be combined with one or more further beams that are non-equiangular with the set of equiangular beams. It is also possible to combine any one of the beam arrangements described in the foregoing, e.g. a v-scan with a Ψ-scan, equiangular beams with one or more v-scans or Ψ-scans, etc.

Further details about different beam arrangements, and systems for generating beam arrangements, are given in U.S. provisional application No. 61/129,372 and U.S. provisional application No. 61/129,373, which were both filed on June 23, 2008.

EXEMPLIFYING IMPLEMENTATION DETAILS

In all of the above embodiments, light sources can operate in any suitable wavelength range, e.g. in the infrared or visible wavelength region. All beams may be generated with identical wavelength. Alternatively, different beam sweeps may be generated with light in different wavelength ranges, permitting differentiation between the beam sweeps based on wavelength. Furthermore, light sources may output either continuous or pulsed radiation. Still further, light sources may be activated concurrently or sequentially. Any type of light source capable of emitting light in a desired wavelength range can be used, for example a diode laser, a VCSEL (vertical-cavity surface-emitting laser), or an LED (light-emitting diode), an incandescent lamp, a halogen lamp, etc. Preferably, the illumination arrangement is configured such that the beam, at the injection site, is essentially collimated in the plane of the panel. This will maximize the amount of radiation that reaches the sensor(s) at the opposite end of the sensing area.

The transmitted energy may be measured by any type of light sensor capable of converting light into an electrical measurement signal. It should be emphasized that in the context of this specification, a "light sensor" implies a 0-dimensional light detector. Thus, the light sensor may be a single light sensing element such as a photo-detector or a pixel on a CCD or CMOS detector. Alternatively, the light sensor may be formed by a group of light sensing elements that are combined for 0-dimensional light detection, by summing/averaging the output of the individual elements in hardware or software.

Typically, the panel is made of solid material, in one or more layers. The internal reflections in the touch surface are caused by total internal reflection (TIR), resulting from a difference in refractive index between the material of the panel and the surrounding medium, typically air. The reflections in the opposite boundary surface may be caused either by TIR or by a reflective coating applied to the opposite boundary surface. The total internal reflection is sustained as long as the radiation is injected into the panel at an angle to the normal of the touch surface which is larger than the critical angle at the respective injection point. The critical angle is governed by the refractive indices of the material receiving the radiation at the injection point and the surrounding material, as is well-known to the skilled person. Generally, the panel may be made of any material that transmits a sufficient amount of radiation in the relevant wavelength range to permit a sensible measurement of transmitted energy. Such material includes glass, poly(methyl methacrylate) (PMMA) and polycarbonates (PC). The panel may be of any shape, such as circular, elliptical or polygonal, including rectangular. The panel is defined by a circumferential edge portion, which may or may not be perpendicular to the top and bottom surfaces of the panel. The radiation may be coupled into and out of the panel directly via the edge portion. Alternatively, a separate coupling element may be attached to the edge portion or to the top or bottom surface of the panel to lead the radiation into or out of the panel. Such a coupling element may have the shape of a wedge (cf. Fig. 5).

The touch-sensing system may also include an interface device that provides a graphical user interface (GUI) within at least part of the sensing area. The interface device may be in the form of a substrate with a fixed image that is arranged over, under or within the panel. Alternatively, the interface device may be a screen (e.g. an LCD - Liquid Crystal Display, a plasma display, or an OLED display - Organic Light-Emitting Diode) arranged underneath or inside the system, or a projector arranged underneath or above the system to project an image onto the panel. Such an interface device may provide a dynamic GUI, similar to the GUI provided by a computer screen.

Although not shown in the drawings, an anti-glare (AG) structure may be provided on one or both of the top and bottom surfaces of the panel. The AG structure is a diffusing surface structure which may be used to reduce glares from external lighting on the surface of the panel. Such glares might otherwise impair the ability of an external observer to view any information provided on the panel by the aforesaid interface device. Furthermore, when the touching object is a naked finger, the contact between the finger and the panel normally leaves a fingerprint on the surface. On a perfectly flat surface, such fingerprints are clearly visible and usually unwanted. By adding an AG structure to the surface, the visibility of fingerprints is reduced. Furthermore, the friction between finger and panel decreases when an anti-glare is used, thereby improving the user experience. Anti-glares are specified in gloss units (GU), where lower GU values result in less glares. In one embodiment, the touch surface(s) of the panel has a GU value of 10-200, preferably 100-120.

In the above-described embodiments, input scanners and/or sensors are placed outside the perimeter of the panel. This might be undesirable, e.g. if the touch-sensing system is to be integrated with an interface device, e.g. a display device. If components of the touch-sensing system are arranged far from the perimeter of the display, the surface area of the complete system may become undesirably large.

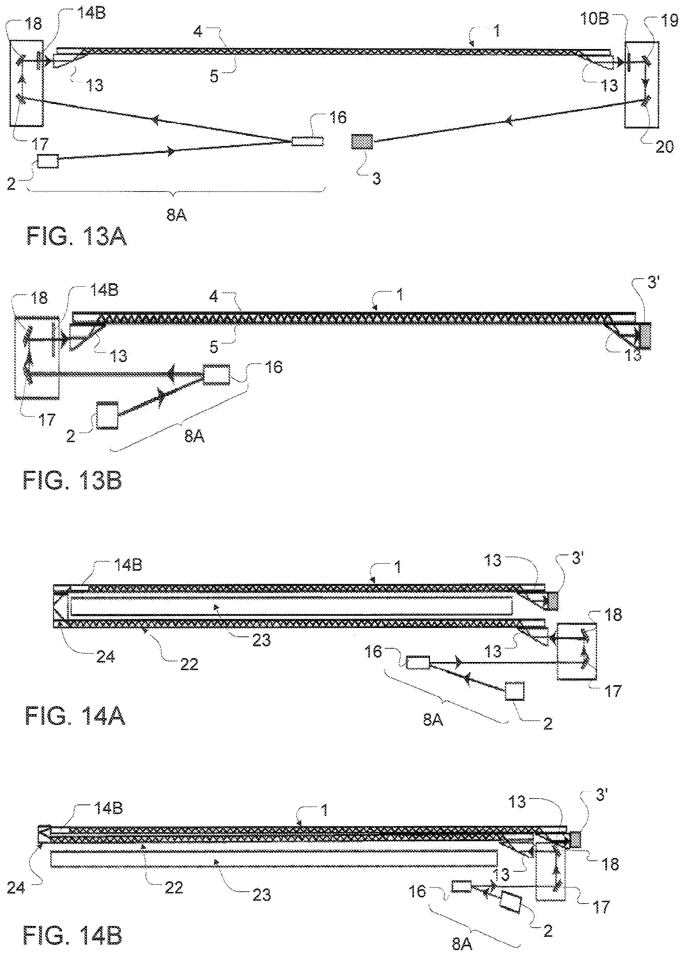

Fig. 13A is a section view of a variant of the embodiment in Fig. 6A. The beam paths are folded to allow the input scanner 8A and the sensor 3 to be placed underneath the panel 1. The illustrated touch-sensing system comprises two folding systems, which are arranged on opposite sides of the panel 1. In the system of Fig. 13A, a beam is emitted from light source 2 to hit rotating mirror 16, which reflects the beam towards the folding system. After entering the first folding system, the beam is first reflected in stationary mirror 17 and thereafter in stationary mirror 18, whereby the beam is folded into the plane of the panel 1. The folded beam then passes through the beam-directing device (lens) 14B and enters the panel 1 via a coupling element 13, which may be attached to the panel 1, e.g. with optically clear glue or any other kind of suitable adhesive. The beam propagates through the panel 1 by internal reflection and exits the panel via the coupling element 13. Thereafter, the beam enters the second folding system, wherein it passes through the re-directing lens device 10B and is reflected in stationary mirrors 19, 20, such that the beam is again folded beneath the panel. The beam thereafter exits the second folding system and is received by the sensor 3.

Fig. 13B is an elevated side view of a variant of the embodiment in Fig. 6B. The beam paths are folded to allow the input scanners 8A-8C to be placed underneath the panel 1. Compared to the embodiment in Fig. 6B, the output scanner and the left-hand folding system have been replaced by an elongate sensor device 3' which is attached to the coupling element 13.

In all embodiments, the touch-sensing system may include a transportation device, which is arranged underneath the panel 1 to define a confined light guiding channel in the illumination arrangement between the input scanner/light source and the injection points on the panel, and/or in the detection arrangement between the outcoupling points on the panel and the output scanner/sensor device. The use of such a transportation device makes it possible to gather the bulk of components at one or a few sides of the panel. Preferably, the transportation device is designed to guide light with a minimum of scattering, to avoid broadening of the beam profile (see discussion below). In the presence of an AG structure on the panel, it is furthermore preferred to include the transportation device in the illumination arrangement, rather than in the detection arrangement, since this will minimize the width of the beam profile at the sensor (see discussion below about broadening of beam due to scattering in the AG structure).

Figs 14A-14B illustrate variants of the embodiment in Fig. 13B, wherein a transportation device is incorporated in the form of a transportation plate 22, which may be made of the same material as the panel or any other sufficiently radiation-transmissive material or combination of materials. The transportation plate suitably has an extent to allow for the above-mentioned beams to be swept within the plate and may have essentially the same size as the panel. In Fig. 14A, the transportation plate 22 is spaced from the panel 1, to accommodate for an interface device 23 to be placed between the panel 1 and the plate 22. In Fig. 14B, the plate 22 is placed in contact with the panel 1, or may be formed as an integrated layer in the panel 1. In both examples, the touch-sensing system includes a distal folding system 24 that directs the beams from the transportation plate 22 into the panel 1. In the example of Fig. 14, the beam-directing device 14B is included in the distal folding system 24. This will minimize the distance between the beam-directing device 14B and sensor device 3' (or the re-directing device 10B, if present) which may reduce the impact of inaccuracies in the device 14B and/or reduce the footprint of the system.

Generally, the use of a transportation plate 22 may provide a touch-sensing system, which is simple, compact, robust and easy to assemble. The beams may be confined within the plate 22 by total internal reflection, and/or by the plate 22 being coated with one or more reflecting layers. In alternative embodiments (not shown), the touch-sensing system may comprise more than one transportation device. For example, the individual beams may be guided in separate transportation devices, or the system may include one or more transportation devices for guiding the beams to the panel and one or more transportation devices for guiding the beams from the panel. Other types of transportation devices may alternatively be used, such as optical fibers.

DETERMINATION OF TOUCH LOCATIONS

A process for determination of touch locations (also denoted "decoding process" herein) was briefly presented above with reference to Fig. 1. The present Applicant has realized that it may be advantageous to design the decoding process to take the effects of light scattering in the panel into account. As will be shown in the following, the decoding process may in fact be improved by causing the propagating light to be scattered at one or both of the boundary surfaces of the light transmissive panel.

As explained in the foregoing, such scattering may be caused by an anti-glare (AG) structure. When a beam of light propagates by internal reflection in a light transmissive panel that has an AG structure on one or both of its boundary surfaces, each internal reflection against such a scattering boundary surface will cause some light to be diverted away from the main direction of the beam and may also cause radiation to escape through the boundary surface. Thus, the provision of an AG structure generally causes the beam to be broadened in the plane of the panel as the beam propagates from its entry point on the panel.

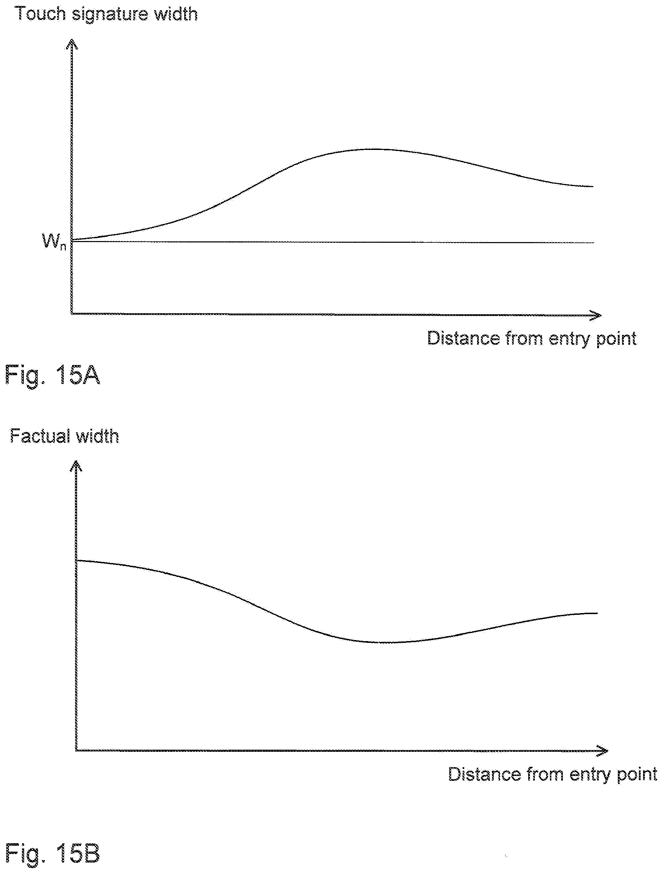

This broadening causes the shape of the touch signature in the spatial transmission signal to depend on the location of the touching object on the panel, specifically the distance between the touching object and the relevant incoupling/entry point. Fig. 15A illustrates an exemplifying dependence between the width of the touch signature caused by a touching object and the distance between the touching object and the entry point. The factual width of the touching object is $W_n$. When the touching object is located close to the entry point, the detected touch signature will be distinct and have a width similar to the factual width. As the touching object is moved away from the entry point, the detected touch signature will gradually broaden. Close to the outcoupling point, the width of the touch signature may again become slightly smaller. It is to be understood that the actual functional dependence between width and touch location is greatly dependent on the actual optical design of the touch-sensing apparatus, and that Fig. 15A is merely given as an example.

In Fig. 15A, it can be seen that a small touching object located centrally between the entry and outcoupling points will yield the same touch signature width as a larger touching object located closer to the entry point. Based on the data in Fig. 15A, it is possible to determine the factual width of a touching object that yields a certain touch signature width, as a function of the distance between the touching object and the entry point. This type of functional dependence is denoted dispersion function in the following. Fig. 15B is a graph of a dispersion function determined for the data in Fig 15A. Thus, Fig. 15B illustrates the factual object width at different locations that will generate the same touch signature width in the spatial transmission signal. As will be further explained in the following, such a dispersion function can be used to improve the precision and/or consistency in determining the location and/or size of one or more touching objects.

The origin of the dispersion function will now be further explained in relation to the linear beam scan embodiment of Fig. 1B. To understand the behavior of a specific touch-sensing apparatus, it is necessary to analyze its optical design. The shape of the diverging set of rays from the entry point depends on many different factors, e.g. panel thickness, internal angle of incidence onto the boundary surfaces, AG structure, etc. The resulting touch signature depends, apart from the diverging set of rays, on a number of other factors, e.g. sensor surface area, effective view angle of sensor, cross-section of injected light, etc. When beams are swept parallel to the edges of the panel, sensor-specific parameters typically have more impact on the touch signature for touch locations close to the outcoupling point. Conversely, emitter-specific properties mainly affect the touch signature for touch locations close to the entry point.

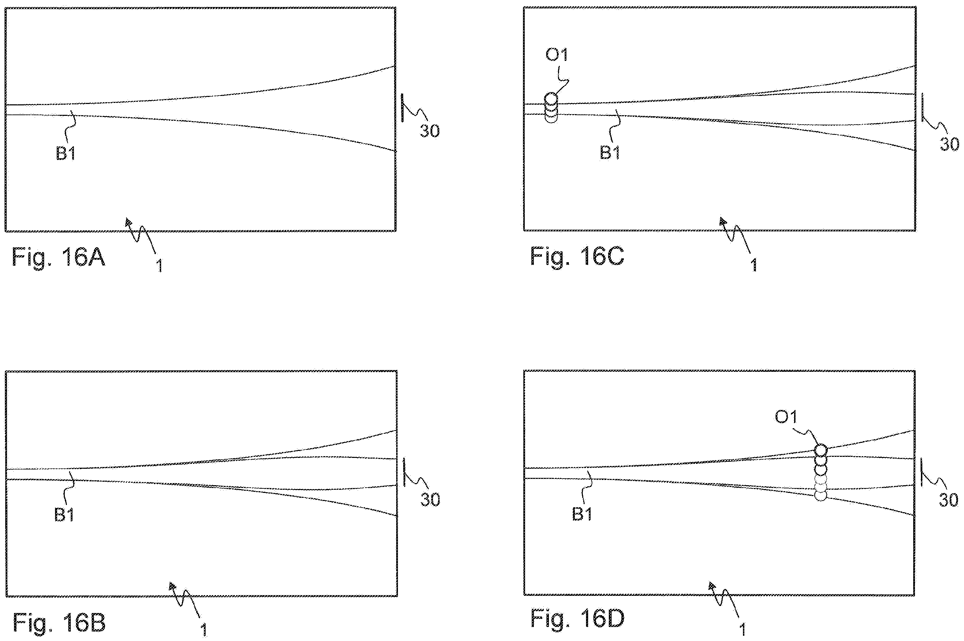

As explained above, a beam of light that is transmitted through the panel will be broadened each time it interacts with the AG structure. Fig. 16A is a plan view of the panel 1 in which a beam B1 is injected at an entry side and propagates to a detection side. At the detection side, the energy of the beam B1 is sensed within a confined area (indicated by 30 and denoted "receiving area" in the following), e.g. if the detection arrangement has a limited view angle such as in the embodiments of Figs 2A-2B. The length of the receiving area 30 is dependent on the effective view angle of the sensor.

As shown in Fig. 16A, the beam B1 diverges as it propagates through the panel. Since the receiving area 30 has a finite length in the plane of the panel, as shown, it will only receive the central parts of the diverging beam B1 that reaches the detection side. Fig. 16B indicates the outer rays that reach the receiving area 30.

Fig. 16C illustrates the situation when an object O1 touches the panel 1 close to the entry side, in this example the left side. For simplicity, we consider a touching object O1 that moves with respect to the beam B1, but the conclusions will be equally applicable for a stationary touching object and a moving beam (as in the beam scan embodiments). Four different locations of the object O1 are shown in the left-hand part of Fig. 16C. Clearly, the object O1 interacts with the beam B1 over a short distance. Fig. 16C also indicates that the object O1 interacts with a large part of the beam B1. Thus, the resulting touch signature will be narrow (small width) and strong (low transmission).

Fig. 16D illustrates the situation when the object O1 touches the panel 1 further away from the entry side. Clearly, the object O1 interacts with the beam B1 over a longer distance. It is also seen that the object O1 interacts with a smaller portion of the beam B1. Therefore, the resulting touch signature will be wider and weaker.

In the example of Fig. 16, the width of the touch signature will decrease slightly for locations to the right of the object O1 in Fig. 16D. Such signature behavior is also illustrated in the graph of Fig. 15A. It should be noted that such a decrease in signature width is only observed when the length of the receiving area 30 is smaller than the width of the dispersed beam at the detection side (e.g. as shown in Fig. 16A). For example, in the embodiments shown in Figs 4A-4B, where the effective view angle of the sensor is large (typically 45°-180°), a decrease in touch signature width is unlikely to be observed.

Above, it was shown that the width and height of a touch signature changes with the location of the touching object due to the effects of scattering. Below, it will now be explained how the resulting dispersion function can be used to improve the decoding process. For reasons of explanation, the dispersive effects are slightly exaggerated in the figures accompanying the following disclosure.

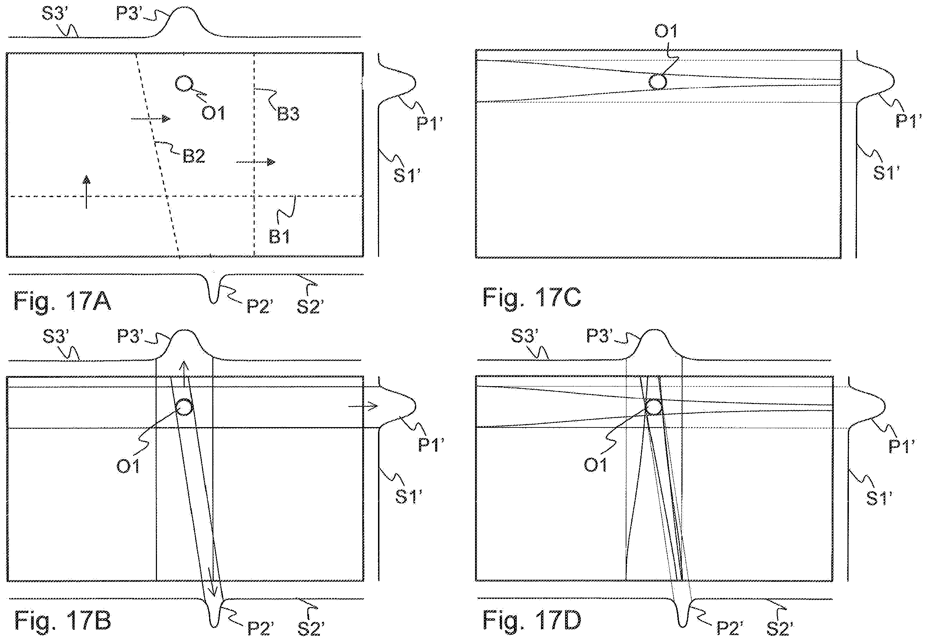

Figs 17A-17D illustrate a linear beam scan embodiment, in which three collimated non-parallel beams are swept (translated) across the panel, resulting in three spatial transmission signals.

Fig. 17A illustrates the three beams B1-B3 and the resulting spatial transmission signals S1'-S3'. A first beam B1, which is parallel to the top and bottom edges of the panel 1, is injected at the left side and detected at the right side of the panel 1, while being swept from the bottom to the top (or vice versa). The resulting transmission signal S1' is shown to the right side of the panel 1. A second beam B2, with a scan angle which is non-parallel to the edges of the panel 1, is injected at the top and is detected at the bottom, while being swept from left to right (or vice versa). The resulting transmission signal S2' is shown at the bottom. A third beam B3, which is parallel to the left and right edges of the panel 1, is injected at the bottom and detected at the top, while being swept from left to right (or vice versa). The resulting transmission signal S3' is shown at the top. Each transmission signal S1'-S3' contains a respective touch signature P1'-P3', resulting from the touching object O1.

Fig. 17B illustrates the attenuated paths determined based on the touch signatures P1'-P3', without considering the signal dispersion caused by scattering. Here, the attenuated paths have been reconstructed by tracing the limits of the touch signature P1'-P3' back to the corresponding entry points, as illustrated by the straight parallel lines extending from the limits of each peak P1'-P3' along the associated beam path. Clearly, there is an inconsistency in the estimated size of the object O1 at the intersection of the attenuated paths.

Fig. 17C illustrates the reconstruction of the attenuation path for the first beam B1 in Fig. 17A, using a dispersion function determined for this embodiment. The dispersion function may be calculated theoretically or may be derived from measured data. Fig. 17C includes two dispersion lines showing the factual width of an object O1 yielding the detected touch signature width as a function of the distance from the entry point. It is seen that if the object O1 is located close to the entry point, the factual width is essentially equal to the width of the touch signature. If the object O1 is located farther away from the entry point, its factual width has to be smaller in order to generate the detected touch signature P1'.

Fig. 17D illustrates the reconstructed attenuation paths for the touch signatures P1'-P3' in the transmission signals S1'-S3' generated by the beams B1-B3, by applying the dispersion function to the width of each touch signature P1'-P3'. Clearly, the resulting factual widths at the intersection of the attenuated paths are consistent. Thus, by applying the dispersion function, it is possible to verify the determined position by checking the consistency of the factual widths at the intersection.

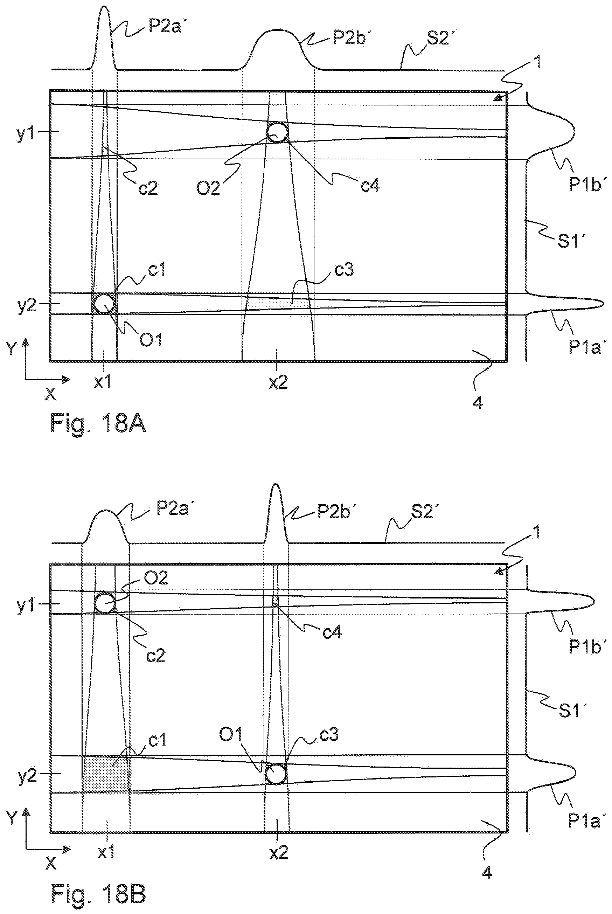

As will be shown in the following, further advantages may be obtained when spatial transmission signals are processed to determine the locations of two or more touching objects on the panel. These advantages will be explained in relation to a linear beam scan embodiment shown in Figs 18A-18B. In this embodiment, two collimated beams are swept (translated) across the panel, resulting in two spatial transmission signals. A first transmission signal S1 is generated by sensing the transmitted energy of a beam B1 which is parallel to the top and bottom edges of the panel 1 and which is injected at the left side and outcoupled at the right side of the panel 1. A second transmission signal S2' is generated by sensing the transmitted energy of a beam B2 which is parallel to the left and right edges of the panel 1 and which is injected at the bottom side and outcoupled at the top side of the panel 1.

In Fig. 18A, each transmission signal S1', S2' contains two touch signatures P1a', P1b', P2a', P2b', each resulting from one of the touching objects O1, 02. Fig. 18A also illustrates the attenuation paths (corrected attenuation paths) that have been reconstructed based on the touch signatures P1a', P1b', P2a', P2b' while applying the dispersion function for this embodiment. Fig. 18A also illustrates the attenuation paths (uncorrected attenuation paths) that are obtained without applying the dispersion function. The attenuation paths form four polygonal intersections, with each intersection being a candidate location c1-c4. Looking at the corrected attenuation paths, it can be seen that two of the intersections are almost square whereas the other two intersections are thin and elongate. If the objects O1, 02 are known to be approximately regular in shape, it can be concluded that the touching objects are located at the square intersections c1, c4. Thus, based on the shape/area of the intersections, true locations can be distinguished from ghost locations among the candidate locations in a multi-touch scenario.

Fig. 18B illustrates the spatial transmission signals S1', S2' that are generated when the two objects O1, 02 are located at the ghost locations in Fig. 18A. Looking at the corrected attenuation paths, it can again be seen that the intersections that correspond to the touching objects O1, 02 are almost square and have similar areas. The intersections c1, c4 at the ghost points are also square, but one intersection has a very small area, and the other intersection has a significantly larger area. Thus, by assessing the areas of the intersections c1-c4, it is possible to determine the two most probable touch locations. It should be realized that it would be much more difficult, if not impossible, to distinguish between true locations and ghost locations based on the uncorrected attenuation paths, since all intersections would have approximately the same shape and area.

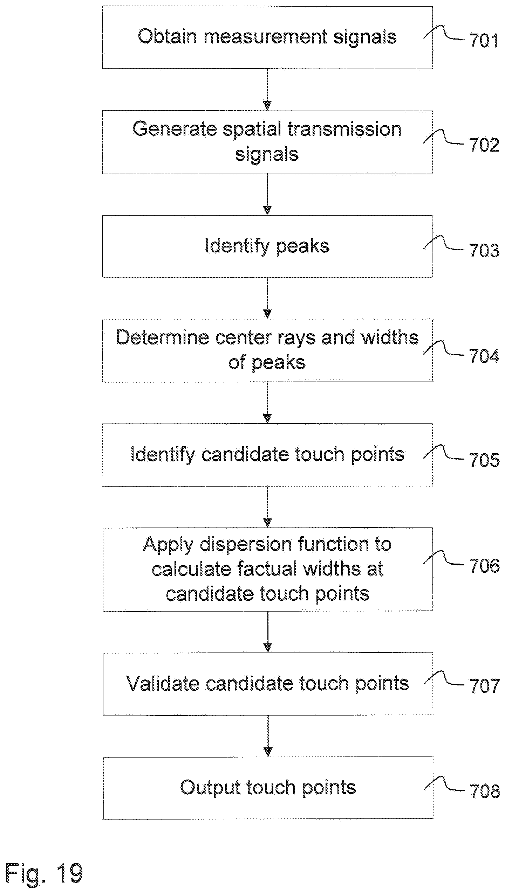

Fig. 19 is a flow chart for an exemplifying decoding process that may be used to identify touch locations in any one of the above-described beam scan embodiments.

In step 701, the process obtains the measurement signals from the light sensors, typically by sampling data values from the measurement signal at given time intervals.

Then, in step 702, the time-dependent measurement signals are processed to form a sample vector for each sheet of light, each sample vector including a series of data values associated with different time points. Depending on implementation, this processing may involve filtering the measurement signals for suppression of noise and/or ambient light, combining measurement signals from different sensors, interpolating the measurement signals, etc. The processing may also include a normalization in which the sample vector is divided by background data. The background data may be a corresponding sample vector that represents the received energy without any object touching the touch surface. The background data may be pre-set or obtained during a separate calibration step. The sample vector is then converted into a spatial transmission signal by means of the aforesaid timing information. In this conversion, the spatial transmission signals may be rectified, i.e. converted to have equidistant sampling distance in the panel coordinate system. Such a rectification may include interpolating each spatial transmission signal based on a sweep function that indicates the beam sweep speed across the outcoupling site, resulting in a data set with samples that are mapped to a uniformly spaced set of outcoupling points in the outcoupling site. Rectification is optional, but may simplify the subsequent computation of touch locations.

In step 703, each spatial transmission signal is processed to identify one or more peaks that may originate from touching objects, while possibly also separating adjacent/overlapping peaks. The identified peaks correspond to the above-discussed touch signatures.

In step 704, the center point of each peak is identified. This step may or may not involve interpolating the data values in the transmission signal. Using the center point, and knowing the scan angle of the beam at each data value in the spatial transmission signal, the process determines a center ray (cf. Fig. 1E) for each center point. Further, the width of each peak in the spatial transmission signals is determined.

In step 705, the intersections between the center rays are determined by triangulation. These intersections form candidate touch points.

In step 706, the factual width at each intersection is calculated for each peak in the transmission signal, using a dispersion function and the peak width. For example, the peak width and location data for an intersection may be input to a function of the type shown in Fig. 15B, to output the factual width at the intersection. Thus, step 706 results in width data for each candidate touch point.

In step 707, the process determines the most probable set of true touch points among the candidate touch points. As indicated in the foregoing, the true touch points may be identified by calculating an area value for each candidate touch point and matching the area values to an area measure, or by calculating a shape value for each candidate touch point and matching the shape values to a shape measure, or a combination thereof.

In step 708, the true touch points are output by the process.

To further exemplify the validation step 707, we consider the situation in Fig. 18A. After applying the above steps 701-706, the process has determined four candidate touch points: $c_1 = (x_1, y_1)$, $c_2 = (x_1, y_2)$, $c_3 = (x_2, y_1)$, and $c_4 = (x_2, y_2)$, and corresponding width data for each candidate point $(w_x, w_y)$. A first validation sub-step may be configured to test for ghost points that have an elongated shape. For each candidate point, the ratio $r = \min(w_x, w_y)/\max(w_x, w_y)$ is calculated using the width data. If the ratio r is significantly smaller for top-left and bottom-right candidate touch points $c_2$, $c_3$, the process concludes that the top-right and bottom-left candidate touch points $c_4$, $c_1$ are the true touch points. A second validation sub-step may be configured to compute the area of the candidate points, e.g. as $w_x \cdot w_y$. If the bottom-left candidate touch point $c_1$ is significantly larger than the other candidate touch points, at the same time as the top-right candidate point $c_4$ is smaller than the other candidate touch points, the process concludes that the bottom-left and top-right candidate touch points $c_1$, $c_4$ are

ghost points (cf. Fig. 18B). In a simplified validation example, the process could be configured to validate only the top-left candidate point $c_2$ or the bottom-right candidate point $c_4$ according to the first validation sub-step. The skilled person understands that there are numerous alternative implementations of the validation step 707, depending e.g. on the number of touches to be resolved, the dispersion function, the shape and area of the objects, the shape and area variations among the objects, etc.

The above example demonstrates that it is generally possible to improve the decoding process by applying a dispersion function in the reconstruction of attenuation paths based on spatial transmission signals generated by sweeping a number of collimated non-parallel beams inside a light transmissive panel.

In the example of Fig. 19, a center ray is first reconstructed for each touch signature by geometrically retracing a center point of the touch signature to a corresponding entry point (step 704). Then, a set of candidate touch points is determined by triangulating the reconstructed center rays (step 705), whereupon the dispersion function is applied to determine factual widths at each candidate touch point (step 706). Thus, the corrected attenuation path is only determined at the candidate touch points.

In a variant (not shown), corrected attenuation paths are determined before the triangulation, i.e. the dispersion function is first applied to reconstruct the full attenuation path from the detection side to the entry side. Then, the full attenuation paths are intersected in a triangulation step, which thus results in both the locations and the factual widths of the candidate touch points.

Although, in the above example, collimated beams are injected into the panel, the skilled person will readily realize how to implement the above teachings in the decoding process to account for beams that diverge or converge in the plane of the panel at the incoupling site. Likewise, although linear beam scans are described, the above teachings are equally applicable to angular beam scans (cf. Fig. 5).

The skilled person realizes that there are many variants and alternatives to the above-described decoding process. For example, the spatial transmission signals may be generated to represent only part of the sample vector. For example, steps 702 and 703 may be combined such that touch signatures are first identified in the sample vectors, whereupon spatial transmission signals are generated only for one of more sample points within the touch signatures in the sample vectors.

In fact, the decoding process could be based on any available image reconstruction algorithm, and especially few-view algorithms that are used in, e.g., the field of tomography. Any such algorithm can be modified to account for dispersion, as long as the dispersion function is known.

OBTAINING THE DISPERSION FUNCTION

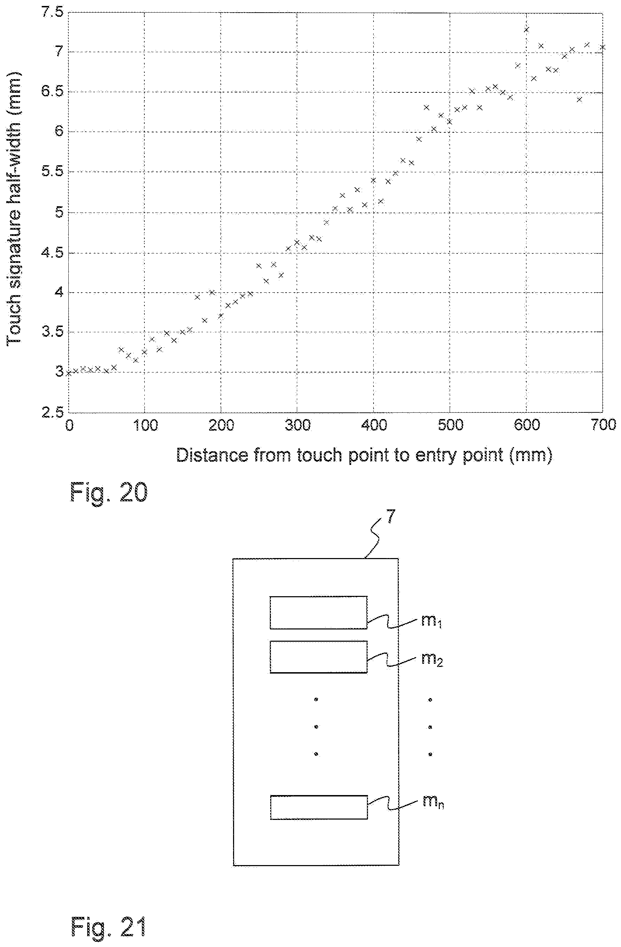

The dispersion function can be obtained by either theoretical calculations for a specific touch-sensing apparatus or by measurements. Fig. 20 is a graph of measurement data obtained from a linear beam scan embodiment of the type shown in Fig. 18, wherein the measurement data has been obtained for a rectangular light transmissive panel with a 37 inch diameter. The graph shows the measured half-width of the touch signature as a function of the distance between the entry point (e.g. located on the left side of the panel in Fig. 18A) and the touching object. Thus, this graph corresponds to the graph in Fig. 15A. The touch signature width is clearly dependent on the distance from the entry point (and also on the distance to the outcoupling point). In this particular example, there is no decrease in touch signature width when the touching object is located close to the outcoupling point. The dispersion function may be given by the actual measurement data, suitably after recalculation into a function as shown in Fig. 15B, or the dispersion function may be derived based on a suitable function that is fit to the measurement data.

DATA PROCESSOR

The above-mentioned data processor is further exemplified in Fig. 21. As shown the data processor 7 comprises a set of elements or means $m_1$-$m_n$ for executing different processing steps in the above-described decoding process. The data processor may be implemented by special-purpose software (or firmware) run on one or more general-purpose or special-purpose computing devices. In this context, it is to be understood that each "element" or "means" of such a computing device refers to a conceptual equivalent of a method step; there is not always a one-to-one correspondence between elements/means and particular pieces of hardware or software routines. One piece of hardware sometimes comprises different means/elements. For example, a processing unit serves as one element/means when executing one instruction, but serves as another element/means when executing another instruction. In addition, one element/means may be implemented by one instruction in some cases, but by a plurality of instructions in some other cases. Such a software controlled computing device may include one or more processing units, e.g. a CPU ("Central Processing Unit"), a DSP ("Digital Signal Processor"), an ASIC ("Application-Specific Integrated Circuit"), discrete analog and/or digital components, or some other programmable logical device, such as an FPGA ("Field Programmable Gate Array"). The computing device may further include a system memory and a system bus that couples various system components including the system memory to the processing unit. The system bus may be any of several types of bus structures including a memory bus or memory controller, a peripheral bus, and a local bus using any of a variety of bus architectures. The system memory may include computer storage media in the form of volatile and/or non-volatile memory such as read only memory (ROM), random access memory (RAM) and flash memory. The special-purpose software may be stored in the system memory, or on other removable/non-removable volatile/non-volatile computer storage media which is included in or accessible to the computing device, such as magnetic media, optical media, flash memory cards, digital tape, solid state RAM, solid state ROM, etc. The computing device may include one or more communication interfaces, such as a serial interface, a parallel interface, a USB interface, a wireless interface, a network adapter, etc, as well as one or more data acquisition devices, such as an A/D converter. One or more I/O devices may be connected to the computing device, via a communication interface, including e.g. a keyboard, a mouse, a touch screen, a display, a printer, a disk drive, etc. The special-purpose software may be provided to the computing device on any suitable computer-readable medium, including a record medium, a read-only memory, or an electrical carrier signal.

The invention has mainly been described above with reference to a few embodiments. However, as is readily appreciated by a person skilled in the art, other embodiments than the ones disclosed above are equally possible within the scope of the invention, which is defined and limited only by the appended patent claims.

For example, it is to be understood that the decoding process need not take dispersion into account, even if the panel is provided with an AG structure, if the resulting performance of the decoding process is deemed acceptable.

Further, one or more of the optical components described in the foregoing may be combined into a single optical unit, or the functionality of a single optical component described in the foregoing may be provided by a combination of components. For example, it is conceivable to integrate the beam-directing device or the re-directing device into the coupling element for coupling radiation into the panel, or into the panel edge.

**Claims**

1. An apparatus for determining a location of at least one object on a touch surface (4), said apparatus comprising:

   a panel (1) defining the touch surface (4) and an opposite surface (5);
   an illumination arrangement adapted to introduce at least two beams (B1-B6) of radiation into the panel (1) for propagation by internal reflection between the touch surface (4) and the opposite surface (5), and to sweep each beam (B1-B6) across the touch surface (4) within a sensing area, whereby an object that touches the touch surface (4) within the sensing area causes said at least two beams (B1-B6) to be temporarily attenuated;

a detection arrangement for coupling said at least two beams (B1-B6) out of the panel (1) as they are swept along one or more elongate outcoupling sites on the panel (1) downstream of the sensing area, said detection arrangement comprising at least one light sensor (3; 3') which is optically coupled to said one or more elongate outcoupling sites and adapted to measure the received energy of the respective beam (B1-B6) within said one or more elongate outcoupling sites; and

a data processor (7) connected to the detection arrangement and configured to obtain output signals (S1, S2) indicative of the received energy of the respective beam (B1-B6) at different spatial locations within each of said one or more elongate outcoupling sites as a function of time and to identify the location of the object based on the output signals (S1, S2), **characterized in that** said at least two beams (B1-B6) comprise a first set of mutually acute beams (B1, B2, B4), and that the illumination arrangement is configured to sweep the first set of mutually acute beams (B1, B2, B4) in a first principal direction (R1) that is essentially parallel to an edge of the panel (1), wherein the beams (B1, B2, B4) in the first set have a maximum mutual acute angle of ≤30°, and preferably ≤20°.

2. The apparatus of claim 1, wherein the data processor (7) is configured to identify, in the output signals (S1, S2), a set of signal profiles (P1, P2) originating from said object, determine at least part of an attenuated light path across the sensing area based on each signal profile (P1, P2), and identify the location of the object based on the thus-determined attenuated light paths.

3. The apparatus of claim 2, wherein the data processor (7) is configured to determine the attenuated light path by mapping at least one time point of each signal profile (P1, P2) in the output signal (S1, S2) to a light path across the sensing area.

4. The apparatus of claim 3, wherein the data processor, in said mapping, is configured to map at least one time point of each signal profile (P1, P2) in the output signal (S1, S2) to a spatial position within the one or more outcoupling sites.

5. The apparatus of claim 2, wherein the data processor (7) is configured to map a sequence of time points in each output signal (S1, S2, S3) to a corresponding sequence of spatial positions within the one or more outcoupling sites, and to identify the set of signal profiles (P1', P2'; P1a', P1b', P2a', P2b') in the thus-mapped output signals (S1', S2', S3').

6. The apparatus of any preceding claim, wherein the illumination arrangement is configured to sweep the beams (B1, B2, B4) of the first set by translating each beam with an essentially invariant main direction within the sensing area.

7. The apparatus of any preceding claim, wherein the detection arrangement comprises a fixed re-directing device (10A, 10B) which is arranged in alignment with and optically facing the outcoupling site and which is configured to receive and re-direct at least one of the beams (B1, B2, B4) of the first set onto a common detection point (D1, D2) while said at least one beam is swept along the touch surface (4); and wherein detection arrangement is configured to measure the received energy within the outcoupling site at said common detection point (D1, D2).

8. The apparatus of claim 7, wherein the fixed re-directing device (10A, 10B) comprises an elongate optical element that defines an output focal plane ($f_{out}$), wherein the illumination arrangement is configured such that said at least one beam, while being swept within the sensing area, is swept along the elongate optical element (10A, 10B) at an essentially invariant angle of incidence.

9. The apparatus of claim 8, wherein the elongate optical element (10A, 10B) is arranged to receive at least two beams (B1, B2, B4) of the first set at a respective angle of incidence, and wherein the detection arrangement comprises at least two light sensors (3), which are arranged at separate locations in said output focal plane ($f_{out}$) to measure the energy of the respective beam (B1, B2, B4) of the first set.

10. The apparatus of any preceding claim, wherein the illumination arrangement comprises a beam-scanning device (8A, 8B) configured to sweep an input beam around an axis of rotation, a fixed beam-directing device (14A, 14B) configured to receive the thus-swept input beam and generate at least one output beam which is translated in a principal direction (R1, R2) while having an essentially invariant main direction, said at least one output beam being coupled into the panel (1), thereby forming at least one of said at least two beams (B1-B6) that are swept along the touch surface (4) within the sensing area.

11. The apparatus of claim 10, wherein the beam-directing device (14A, 14B) comprises an elongate optical element that defines an input focal plane ($f_{in}$), wherein said axis of rotation is located in said input focal plane ($f_{in}$).

**12.** The apparatus of claim 11, wherein the beam-scanning device (8A, 8B) is configured to sweep at least two separate input beams along the elongate optical element (14A, 14B), each input beam being swept around a separate axis of rotation in said input focal plane ($f_{in}$), thereby causing the elongate optical element (14A, 14B) to generate output beams with separate main directions.

**13.** The apparatus of any preceding claim, wherein said at least two beams (B1-B6) comprises a second set of mutually acute beams (B3, B5, B6), and wherein the illumination arrangement is configured to sweep the second set of mutually acute beams (B3, B5, B6) in a second principal direction (R2) across the panel (1), wherein the beams (B3, B5, B6) in the second set have a maximum mutual acute angle of ≤30°, and preferably ≤20°.

**14.** A method of operating an apparatus for determining a location of at least one object on a touch surface (4), said touch surface (4) being part of a panel (1) that defines the touch surface (4) and an opposite surface (5), said method comprising the steps of:

operating an illumination arrangement to introduce at least two beams (B1-B6) of radiation into the panel (1) for propagation by internal reflection between the touch surface (4) and the opposite surface (5), and to sweep each beam (B1-B6) across the touch surface (4) within a sensing area, whereby an object that touches the touch surface (4) within the sensing area causes said at least two beams (B1-B6) to be temporarily attenuated, and whereby each beam (B1-B6) is swept along one or more elongate outcoupling sites on the panel (1) downstream of the sensing area;

operating at least one light sensor (3; 3'), which is optically coupled to said one or more elongate outcoupling sites, to measure the received energy of the respective beam (B1-B6) within said one or more elongate outcoupling sites;

obtaining, from said at least one light sensor (3; 3'), output signals (S1, S2) indicative of the received energy of the respective beam (B2-B6) at different spatial locations within each of said one or more elongate outcoupling sites as a function of time; and

identifying, based on the output signals (S1, S2), the location of the object;

**characterized in that** the step of operating the illumination arrangement comprises operating the illumination arrangement to sweep a first set of mutually acute beams (B1, B2, B4) in a first principal direction (R1) that is essentially parallel to an edge of the panel (1), wherein the beams (B1, B2, B4) in the first set have a maximum mutual acute angle of ≤30°, and preferably ≤20°.

**15.** A computer program product comprising computer code which, when executed on a data-processing system, including an apparatus as claimed in claim 1, is adapted to carry out the method of claim 14.

**Patentansprüche**

**1.** Vorrichtung zum Bestimmen eines Orts eines oder mehrerer Objekte auf einer Berührungsoberfläche (4), wobei die Vorrichtung umfasst:

ein Feld (1), das die Berührungsoberfläche (4) und eine gegenüberliegende Oberfläche (5) definiert;
eine Beleuchtungseinrichtung, die ausgelegt ist, um mindestens zwei Strahlen (B1-B6) von Strahlung für eine Ausbreitung durch interne Reflexion zwischen der Berührungsoberfläche (4) und der gegenüberliegenden Oberfläche (5) in das Feld (1) einzuleiten und jeden Strahl (B1-B6) die Berührungsoberfläche (4) innerhalb eines Abtastungsbereichs überstreichen zu lassen, wodurch ein Objekt, das die Berührungsoberfläche (4) innerhalb des Abtastungsbereichs berührt, bewirkt, dass die mindestens zwei Strahlen (B1-B6) temporär abgeschwächt werden;
eine Erfassungseinrichtung zum Auskoppeln der mindestens zwei Strahlen (B1-B6) aus dem Feld (1), wenn sie entlang einer oder mehrerer länglicher Auskopplungsstellen auf dem Feld (1) stromab des Abtastungsbereichs gestrichen sind, wobei die Erfassungseinrichtung mindestens einen Lichtsensor (3; 3') umfasst, der optisch mit der einen oder den mehreren länglichen Auskopplungsstellen gekoppelt und ausgelegt ist, um die empfangene Energie des entsprechenden Strahls (B1-B6) innerhalb der einen oder mehreren länglichen Auskopplungsstellen zu messen; und
einen Datenprozessor (7), der mit der Erfassungseinrichtung verbunden und konfiguriert ist, um Ausgabesignale (S1, S2) zu erhalten, die auf die empfangene Energie des entsprechenden Strahls (B1-B6) an verschiedenen räumlichen Positionen innerhalb jeder von der einen oder den mehreren länglichen Auskopplungsstellen als eine Funktion von Zeit hinweisen, und den Ort des Objekts basierend auf den Ausgabesignalen (S1, S2) zu identifizieren, **dadurch gekennzeichnet, dass** die mindestens zwei Strahlen (B1-B6) einen ersten Satz von spitz aufeinander stehenden Strahlen (B1, B2, B4) umfassen und dass die Beleuchtungseinrichtung konfiguriert ist, um den ersten Satz von spitz aufeinander stehenden Strahlen (B1, B2, B4) in einer ersten Hauptrichtung (R1) überstreichen zu lassen, die im Wesentlichen parallel zu einem Rand des Feldes (1) ist, wobei die Strahlen (B1, B2, B4) in dem ersten Satz einen maximalen gegenseitigen spitzen Winkel von ≤ 30° und bevorzugt ≤ 20° haben.

2. Vorrichtung nach Anspruch 1, wobei der Datenprozessor (7) konfiguriert ist, um in den Ausgabesignalen (S1, S2) einen Satz von Signalprofilen (P1, P2) zu identifizieren, die von dem Objekt stammen, mindestens einen Teil eines abgeschwächten Lichtpfades über dem Abtastungsbereich basierend auf jedem Signalprofil (P1, P2) zu bestimmen und den Ort des Objekts basierend auf den dadurch bestimmten abgeschwächten Lichtpfaden zu identifizieren.

3. Vorrichtung nach Anspruch 2, wobei der Datenprozessor (7) konfiguriert ist, um den abgeschwächten Lichtpfad durch Abbilden mindestens eines Zeitpunktes jedes Signalprofils (P1, P2) in dem Ausgabesignal (S1, S2) auf einen Lichtpfad über dem Abtastungsbereich zu bestimmen.

4. Vorrichtung nach Anspruch 3, wobei der Datenprozessor bei dem Abbilden konfiguriert ist, um mindestens einen Zeitpunkt jedes Signalprofils (P1, P2) in dem Ausgabesignal (S1, S2) auf eine räumliche Position innerhalb der einen oder mehreren Auskopplungsstellen abzubilden.

5. Vorrichtung nach Anspruch 2, wobei der Datenprozessor (7) konfiguriert ist, um eine Sequenz von Zeitpunkten in jedem Ausgabesignal (S1, S2, S3) auf eine korrespondierende Sequenz von räumlichen Positionen innerhalb der einen oder mehreren Auskopplungsstellen abzubilden und den Satz von Signalprofilen (P1', P2'; P1a', P1b'; P2a', P2b') in den dadurch abgebildeten Ausgabesignalen (S1', S2', S3') zu identifizieren.

6. Vorrichtung nach einem vorstehenden Anspruch, wobei die Beleuchtungseinrichtung konfiguriert ist, um die Strahlen (B1, B2, B4) des ersten Satzes durch Übertragen jedes Strahls mit einer im Wesentlichen invarianten Hauptrichtung innerhalb des Abtastungsbereichs überstreichen zu lassen.

7. Vorrichtung nach einem vorstehenden Anspruch, wobei die Erfassungseinrichtung eine feste Umlenkungsvorrichtung (10A, 10B) umfasst, die in einer Linie mit der Auskopplungsstelle und dieser optisch gegenüberstehend angeordnet ist und die konfiguriert ist, um mindestens einen der Strahlen (B1, B2, B4) des ersten Satzes auf einem gemeinsamen Erfassungspunkt (D1, D2) zu empfangen und umzulenken, während der mindestens eine Strahl entlang der Berührungsoberfläche (4) überstreichen kann; und wobei die Erfassungseinrichtung konfiguriert ist, um die empfangene Energie innerhalb der Auskopplungsstelle an dem gemeinsamen Erfassungspunkt (D1, D2) zu messen.

8. Vorrichtung nach Anspruch 7, wobei die feste Umlenkungsvorrichtung (10A, 10B) ein längliches optisches Element umfasst, das eine Ausgabebrennebene ($f_{out}$) definiert, wobei die Beleuchtungseinrichtung konfiguriert ist, so dass der mindestens eine Strahl mit einem im Wesentlichen invarianten Einfallswinkel entlang des länglichen optischen Elements (10A, 10B) überstreichen kann, während er innerhalb des Abtastungsbereichs überstreichen kann.

9. Vorrichtung nach Anspruch 8, wobei das längliche optische Element (10A, 10B) angeordnet ist, um mindestens zwei Strahlen (B1, B2, B4) des ersten Satzes in einem entsprechenden Einfallswinkel zu empfangen, und wobei die Erfassungseinrichtung mindestens zwei Lichtsensoren (3) umfasst, die an getrennten Orten in der Ausgabebrennebene ($f_{out}$) angeordnet sind, um die Energie des entsprechenden Strahls (B1, B2, B4) des ersten Satzes zu messen.

10. Vorrichtung nach einem vorstehenden Anspruch, wobei die Beleuchtungseinrichtung eine Strahlenabtastungsvorrichtung (8A, 8B), die konfiguriert ist, um einen Eingangsstrahl um eine Drehachse herum überstreichen zu lassen, und eine feste Strahlenlenkungsvorrichtung (14A, 14B) umfasst, die konfiguriert ist, um den dadurch überstrichenen Eingangsstrahl zu empfangen und mindestens einen Ausgabestrahl zu erzeugen, der in eine Hauptrichtung (R1, R2) übertragen wird, während er eine im Wesentlichen invariante Hauptrichtung hat, wobei der mindestens eine Ausgabestrahl in das Feld (1) gekoppelt wird, wodurch mindestens einer von den mindestens zwei Strahlen (B1-B6) gebildet wird, die entlang der Berührungsoberfläche (4) innerhalb des Abtastungsbereichs überstreichen können.

11. Vorrichtung nach Anspruch 10, wobei die Strahlenlenkungsvorrichtung (14A, 14B) ein längliches optisches Element umfasst, das eine Eingabebrennebene ($f_{in}$) definiert, wobei sich die Drehachse in der Eingabebrennebene ($f_{in}$) befindet.

12. Vorrichtung nach Anspruch 11, wobei die Strahlenabtastungsvorrichtung (8A, 8B) konfiguriert ist, um mindestens zwei getrennte Eingangsstrahlen entlang des länglichen optischen Elements (14A, 14B) überstreichen zu lassen, wobei jeder Eingangsstrahl um eine getrennte Drehachse in der Eingabebrennebene ($f_{in}$) überstreichen kann, wodurch bewirkt wird, dass das längliche optische Element (14A, 14B) Ausgabestrahlen mit getrennten Hauptrichtungen erzeugt.

13. Vorrichtung nach einem vorstehenden Anspruch, wobei die mindestens zwei Strahlen (B1-B6) einen zweiten Satz von spitz aufeinander stehenden Strahlen (B3, B5, B6) umfassen und wobei die Beleuchtungseinrichtung konfiguriert ist, um den zweiten Satz von spitz aufeinander stehenden Strahlen (B3, B5, B6) in einer zweiten Hauptrichtung (R2) das Feld (1) überstreichen zu lassen, wobei die Strahlen (B3, B5, B6) in dem zweiten Satz einen maximalen gegenseitigen spitzen Winkel von ≤ 30° und bevorzugt ≤ 20° haben.

14. Verfahren zum Betreiben einer Vorrichtung zum Bestimmen eines Orts mindestens eines Objektes auf einer Berührungsoberfläche (4), wobei die Berührungsoberfläche (4) ein Teil eines Feldes (1) ist, das die Berührungsoberfläche (4) und eine gegenüberliegende Oberfläche (5) definiert, wobei das Verfahren die folgenden Schritte umfasst:

Betreiben einer Beleuchtungseinrichtung, um mindestens zwei Strahlen (B1-B6) von Strahlung für eine Ausbreitung durch interne Reflexion zwischen der Berührungsoberfläche (4) und der gegenüberliegenden Oberfläche (5) in das Feld (1) einzuleiten und jeden Strahl (B1-B6) die Berührungsoberfläche (4) innerhalb eines Abtastungsbereichs überstreichen zu lassen, wodurch ein Objekt, das die Berührungsoberfläche (4) innerhalb des Abtastungsbereichs berührt, bewirkt, dass die mindestens zwei Strahlen (B1-B6) temporär abgeschwächt werden, und wodurch jeder Strahl (B1-B6) entlang einer oder mehrerer länglicher Auskopplungsstellen auf dem Feld (1) stromab des Abtastungsbereichs überstreichen kann;
Betreiben mindestens eines Lichtsensors (3, 3'), der optisch mit der einen oder den mehreren länglichen Auskopplungsstellen gekoppelt und ausgelegt ist, um die empfangene Energie des entsprechenden Strahls (B1-B6) innerhalb der einen oder den mehreren länglichen Auskopplungsstellen zu messen;
Erhalten von Ausgabesignalen (S1, S2) von dem mindestens einen Lichtsensor (3, 3'), die auf die empfangene Energie des entsprechenden Strahls (B2-B6) an verschiedenen räumlichen Positionen innerhalb jeder von der einen oder den mehreren länglichen Auskopplungsstellen als eine Funktion von Zeit hinweisen, und basierend auf den Ausgabesignalen (S1, S2), Identifizieren des Orts des Objekts;
**dadurch gekennzeichnet, dass** der Schritt des Betreibens der Beleuchtungseinrichtung das Betreiben der Beleuchtungseinrichtung umfasst, um einen ersten Satz von spitz aufeinander stehenden Strahlen (B1, B2, B4) in einer ersten Hauptrichtung (R1) überstreichen zu lassen, die im Wesentlichen parallel zu einem Rand des Feldes (1) ist, wobei die Strahlen (B1, B2, B4) in dem ersten Satz einen maximalen gegenseitigen spitzen Winkel von ≤ 30° und bevorzugt ≤ 20° haben.

15. Computerprogrammprodukt, das Computercode umfasst, der, wenn er auf einem Datenverarbeitungssystem ausgeführt wird, das eine Vorrichtung wie in Anspruch 1 beansprucht umfasst, ausgelegt ist, um das Verfahren nach Anspruch 14 auszuführen.

**Revendications**

1. Appareil de détermination d'un emplacement d'au moins un objet sur une surface tactile (4), ledit appareil comprenant :

un panneau (1) définissant la surface tactile (4) et une surface opposée (5);
un agencement d'éclairage adapté à introduire au moins deux faisceaux (B1 à B6) de rayonnement dans le panneau (1) pour une propagation par réflexion interne entre la surface tactile (4) et la surface opposée (5), et pour balayer chaque faisceau (B1 à B6) sur la surface tactile (4) dans une zone de détection, moyennant quoi un objet qui touche la surface tactile (4) dans la zone de détection amène lesdits au moins deux faisceaux (B1 à B6) à être temporairement atténués ;
un agencement de détection pour coupler lesdits au moins deux faisceaux (B1 à B6) hors du panneau (1) à mesure qu'ils sont balayés le long d'un ou de plusieurs sites de découplage allongés sur le panneau (1) en aval de la zone de détection, ledit agencement de détection comprenant au moins un capteur de lumière (3 ; 3') qui est couplé optiquement auxdits un ou plusieurs sites de découplage allongés et adapté à mesurer l'énergie reçue du faisceau (B1 à B6) respectif dans lesdits un ou plusieurs sites de découplage allongés ; et
un processeur de données (7) connecté à l'agencement de détection et configuré pour obtenir des signaux de sortie (S1, S2) indicatifs de l'énergie reçue du faisceau (B1 à B6) respectif à des emplacements spatiaux différents dans chacun desdits un ou plusieurs sites de découplage allongés en fonction du temps et pour identifier l'emplacement de l'objet sur la base des signaux de sortie (S1, S2), **caractérisé en ce que** lesdits au moins deux faisceaux (B1 à B6) comprennent un premier ensemble de faisceaux mutuellement aigus (B1, B2, B4), et **en ce que** l'agencement d'éclairage est configuré pour balayer le premier ensemble de faisceaux mutuellement aigus (B1, B2, B4) dans une première direction principale (R1) qui est sensiblement parallèle à un bord du panneau (1), dans lequel les faisceaux (B1, B2, B4) dans le premier ensemble ont un angle aigu mutuel maximal de ≤ 30°, de préférence ≤ 20°.

2. Appareil selon la revendication 1, dans lequel le processeur de données (7) est configuré pour identifier, dans les signaux de sortie (S1, S2), un ensemble de profils de signal (P1, P2) provenant dudit objet, déterminer au moins une partie d'un trajet de lumière atténuée dans la zone de détection sur la base de chaque profil de signal (P1, P2), et identifier l'emplacement de l'objet sur la base des trajets de lumière atténuée ainsi déterminés.

3. Appareil selon la revendication 2, dans lequel le processeur de données (7) est configuré pour déterminer le trajet de lumière atténuée en mappant au moins un point temporel de chaque profil de signal (P1, P2) dans le signal de sortie (S1, S2) avec un trajet de lumière dans la zone de détection.

4. Appareil selon la revendication 3, dans lequel le processeur de données, lors dudit mappage, est configuré pour mapper au moins un point temporel de chaque profil de signal (P1, P2) dans le signal de sortie (S1, S2) avec une position spatiale dans le ou les sites de découplage.

5. Appareil selon la revendication 2, dans lequel le processeur de données (7) est configuré pour mapper une séquence de points temporels dans chaque signal de sortie (S1, S2, S3) avec une séquence correspondante de positions spatiales dans le ou les sites de découplage, et pour identifier l'ensemble de profils de signal (P1', P2' ; P1a', P1b', P2a', P2b') dans les signaux de sortie ainsi mappés (S1', S2', S3').

6. Appareil selon une quelconque revendication précédente, dans lequel l'agencement d'éclairage est configuré pour balayer les faisceaux (B1, B2, B4) du premier ensemble en translatant chaque faisceau avec une direction principale sensiblement invariante dans la zone de détection.

7. Appareil selon une quelconque revendication précédente, dans lequel l'agencement de détection comprend un dispositif de redirection fixe (10A, 10B) qui est agencé en alignement avec le site de découplage et faisant face optiquement à celui-ci et qui est configuré pour recevoir et rediriger au moins l'un des faisceaux (B1, B2, B4) du premier ensemble sur un point de détection commun (D1, D2) tandis que ledit au moins un faisceau est balayé sur la surface tactile (4) ; et dans lequel l'agencement de détection est configuré pour mesurer l'énergie reçue dans le site de découplage au niveau dudit point de détection commun (D1, D2).

8. Appareil selon la revendication 7, dans lequel le dispositif de redirection fixe (10A, 10B) comprend un élément optique allongé qui définit un plan focal de sortie ($f_{out}$), dans lequel l'agencement d'éclairage est configuré de sorte que ledit au moins un faisceau, tout en étant balayé dans la zone de détection, soit balayé le long de l'élément optique allongé (10A, 10B) à un angle d'incidence sensiblement invariant.

9. Appareil selon la revendication 8, dans lequel l'élément optique allongé (10A, 10B) est agencé pour recevoir au moins deux faisceaux (B1, B2, B4) du premier ensemble à un angle d'incidence respectif, et dans lequel l'agencement de détection comprend au moins deux capteurs de lumière (3), qui sont agencés à des emplacements séparés dans ledit plan focal de sortie ($f_{out}$) pour mesurer l'énergie du faisceau (B1, B2, B4) respectif du premier ensemble.

10. Appareil selon une quelconque revendication précédente, dans lequel l'agencement d'éclairage comprend un dispositif de balayage de faisceau (8A, 8B) configuré pour balayer un faisceau d'entrée autour d'un axe de rotation, un dispositif de direction de faisceau fixe (14A, 14B) configuré pour recevoir le faisceau d'entrée ainsi balayé et générer au moins un faisceau de sortie qui est translaté dans une direction principale (R1, R2) tout en ayant une direction principale sensiblement invariante, ledit au moins un faisceau de sortie étant couplé dans le panneau (1), formant ainsi au moins l'un desdits deux faisceaux (B1 à B6) qui sont balayés le long de la surface tactile (4) dans la zone de détection.

11. Appareil selon la revendication 10, dans lequel le dispositif de direction de faisceau (14A, 14B) comprend un élément optique allongé qui définit un plan focal d'entrée ($f_{in}$), dans lequel ledit axe de rotation est situé dans ledit plan focal d'entrée ($f_{in}$).

12. Appareil selon la revendication 11, dans lequel le dispositif de balayage de faisceau (8A, 8B) est configuré pour balayer au moins deux faisceaux d'entrée séparés le long de l'élément optique allongé (14A, 14B), chaque faisceau d'entrée étant balayé autour d'un axe de rotation séparé dans ledit plan focal d'entrée ($f_{in}$), amenant ainsi l'élément optique allongé (14A, 14B) à générer des faisceaux de sortie avec des directions principales séparées.

13. Appareil selon une quelconque revendication précédente, dans lequel lesdits au moins deux faisceaux (B1 à B6) comprennent un second ensemble de faisceaux mutuellement aigus (B3, B5, B6), et dans lequel l'agencement d'éclairage est configuré pour balayer le second ensemble de faisceaux mutuellement aigus (B3, B5, B6) dans une seconde direction principale (R2) sur le panneau (1), dans lequel les faisceaux (B3, B5, B6) dans le second ensemble ont un angle aigu mutuel maximal de $\leq 30°$, et de préférence $\leq 20°$.

14. Procédé de mise en oeuvre d'un appareil de détermination d'un emplacement d'au moins un objet sur une surface tactile (4), ladite surface tactile (4) faisant partie d'un panneau (1) qui définit la surface tactile (4) et une surface opposée (5), ledit procédé comprenant les étapes :

de mise en oeuvre d'un agencement d'éclairage pour introduire au moins deux faisceaux (B1 à B6) de rayonnement dans le panneau (1) pour une propagation par réflexion interne entre la surface tactile (4) et la surface opposée (5), et pour balayer chaque faisceau (B1 à B6) sur la surface tactile (4) dans une zone de détection, moyennant quoi un objet qui touche la surface tactile (4) dans la zone de détection amène lesdits au moins deux faisceaux (B1 à B6) à être temporairement atténués, et moyennant quoi chaque faisceau (B1 à B6) est balayé le long d'un ou de plusieurs sites de découplage allongés sur le panneau (1) en aval de la zone de détection ;
de mise en oeuvre d'au moins un capteur de lumière (3 ; 3'), qui est couplé optiquement auxdits un ou plusieurs sites de découplage allongés, pour mesurer l'énergie reçue du faisceau (B1 à B6) respectif dans lesdits un ou plusieurs sites de découplage allongés ;
d'obtention, en provenance dudit au moins un capteur de lumière (3 ; 3'), de signaux de sortie (S1, S2) indicatifs de l'énergie reçue du faisceau (B2 à B6) respectif à des emplacements spatiaux différents dans chacun desdits un ou plusieurs sites de découplage allongés en fonction du temps ; et
d'identification, sur la base des signaux de sortie (S1, S2), de l'emplacement de l'objet ;
**_caractérisé en ce que_** l'étape de mise en oeuvre de l'agencement d'éclairage comprend la mise en oeuvre de l'agencement d'éclairage pour balayer un premier ensemble de faisceaux mutuellement aigus (B1, B2, B4) dans une première direction principale (R1) qui est sensiblement parallèle à un bord du panneau (1), dans lequel les faisceaux (B1, B2, B4) dans le premier ensemble ont un angle aigu mutuel maximal de

$\leq 30°$, et de préférence $\leq 20°$.

15. Produit de programme d'ordinateur comprenant un code d'ordinateur qui, lorsqu'il est exécuté sur un système de traitement de données, comportant un appareil tel que revendiqué à la revendication 1, est adapté à réaliser le procédé selon la revendication 14.

FIG. 1A

FIG. 1B

FIG. 1C

FIG. 1D

FIG. 1E

FIG. 2A

FIG. 2B

FIG. 2C

FIG. 3A

FIG. 3B

FIG. 3C

FIG. 3D

FIG. 4

FIG. 5A

FIG. 5B

FIG. 6A

FIG. 6B

FIG. 6C

FIG. 6D

FIG. 6E

FIG. 7

FIG. 8A

FIG. 8B

FIG. 8C

FIG. 9A

FIG. 9B

FIG. 10A

FIG. 10B

FIG. 10C

FIG. 11

FIG. 12

FIG. 13A

FIG. 13B

FIG. 14A

FIG. 14B

Touch signature width

$W_n$

Distance from entry point

Fig. 15A

Factual width

Distance from entry point

Fig. 15B

Fig. 16A

Fig. 16B

Fig. 16C

Fig. 16D

Fig. 17C

Fig. 17D

Fig. 17A

Fig. 17B

Fig. 18A

Fig. 18B

Obtain measurement signals — 701

Generate spatial transmission signals — 702

Identify peaks — 703

Determine center rays and widths of peaks — 704

Identify candidate touch points — 705

Apply dispersion function to calculate factual widths at candidate touch points — 706

Validate candidate touch points — 707

Output touch points — 708

Fig. 19

Fig. 20

Fig. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040252091 A
- US 3673327 A
- US 61129372 A
- US 61129373 B